(19) Europäisches Patentamt
European Patent Office
Office européen des brevets

(11) **EP 3 474 172 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(51) Int Cl.:
**G06F 21/44** *(2013.01)*   **G06F 21/62** *(2013.01)*

(21) Anmeldenummer: **18200450.7**

(22) Anmeldetag: **15.10.2018**

(54) **ZUGANGSKONTROLLE UNTER VERWENDUNG EINER BLOCKCHAIN**

ACCESS CONTROL USING A BLOCKCHAIN

CONTRÔLE D'ACCÈS À L'AIDE D'UNE CHAÎNE DE BLOCS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2017 DE 102017218729**

(43) Veröffentlichungstag der Anmeldung:
**24.04.2019 Patentblatt 2019/17**

(73) Patentinhaber: **Bundesdruckerei GmbH**
**10969 Berlin (DE)**

(72) Erfinder:
• **DIETRICH, Frank**
  **12437 Berlin (DE)**
• **PAESCHKE, Manfred**
  **16348 Wandlitz (DE)**

(74) Vertreter: **Richardt Patentanwälte PartG mbB**
**Wilhelmstraße 7**
**65185 Wiesbaden (DE)**

(56) Entgegenhaltungen:
**WO-A1-2017/171165    DE-A1-102016 200 003**

EP 3 474 172 B1

**Beschreibung**

Die Erfindung betrifft ein Verfahren zur Zugriffskontrolle, ein System zur Zugriffskontrolle, ein Verfahren zur Freigabe eines Zugangs zu einer Sicherungseinrichtung sowie ein Sicherungssystem.

Elektronische Schließ- und Zugangssysteme haben sowohl im privaten als auch im gewerblichen Umfeld eine hohe Verbreitung gefunden. Solche Systeme dienen beispielsweise dazu, ausschließlich einem vordefinierten Personenkreis Zutritt zu einem Gebäude oder Zugriff auf ein elektronisches System zu ermöglichen. Damit eine bestimmte Person Zutritt bzw. Zugriff erhält, ist ein Nachweis einer Zutritts- bzw. Zugriffsberechtigung der entsprechenden Person gegenüber dem Schließ- und Zugangssystem erforderlich. Dies kann beispielsweise mittels Passworteingabe oder Erfassung biometrischer Merkmale über ein Terminal oder mittels einer Berechtigungskarte, die Daten mit dem Terminal austauscht, erfolgen.

Bekannte Verfahren für elektronische Schließ- und Zugangssysteme basieren auf kryptographischen Verfahren zum Schutz vor unberechtigter Benutzung dieser Systeme. Als kryptographische Verfahren sind in diesem Zusammenhang sowohl symmetrische als asymmetrische Lösungen bekannt. Asymmetrische Verfahren basieren im Allgenmeinen auf PKIs. PKI-basierte Systeme haben den Nachteil, dass sie eine Online-Verbindung benötigen, wenn die verwendeten Zertifikate auf ihre Gültigkeit Prüft werden sollen. Die Prüfungen können z.B. durch einen Internet-Dienst angeboten werden, der vom Zertifikatsherausgeber (ZDA) betrieben wird. Bei einem solchen Dienst besteht die Gefahr, dass er z.B. durch externe Angriffe zu einem sog. "Single Point of Failure" wird und somit nicht mehr verfügbar ist.

In Dokument DE102016200003 A1 wird ein Verfahren zur Kontrolle des Zugriffs auf ein in einem ID-Token gespeichertes Attribut offenbart. Ein Terminal und das Token führen eine gegenseitige Authentisierung aus.

Der Erfindung liegt die Aufgabe zugrunde, ein verbessertes Verfahren zur Zugriffskontrolle sowie ein System zum Ausführen des Verfahrens zu schaffen.

Die der Erfindung zugrunde liegende Aufgabe wird durch die Merkmale der unabhängigen Patentansprüche gelöst. Bevorzugte Ausführungsformen der Erfindung sind in den abhängigen Patentansprüchen angegeben.

Ausführungsformen betreffen ein Verfahren zur Kontrolle eines Zugriffs eines Terminals auf ein in einem ID-Token gespeichertes Attribut, wobei Terminal-Zertifikatsinformationen zu einem dem Terminal zugeordneten Terminal-Zertifikat in einem oder mehreren Einträgen einer ersten Blockchain gespeichert sind, wobei die erste Blockchain in einem ersten Speicher des ID-Tokens gespeichert ist, wobei ID-Token-Zertifikatsinformationen zu einem dem ID-Token zugeordneten ID-Token-Zertifikat in einem oder mehreren Einträgen einer zweiten Blockchain gespeichert sind, wobei die zweite Blockchain in einem zweiten Speicher des Terminals gespeichert ist, wobei das Verfahren umfasst:

- Ausführen einer Terminal-Authentifizierung, wobei das Terminal durch den ID-Token unter Verwendung des Terminal-Zertifikats und der Terminal-Zertifikatsinformationen der zweiten Blockchain authentifiziert wird,
- Ausführen einer ID-Token-Authentifizierung, wobei der ID-Token durch das Terminal unter Verwendung des ID-Token-Zertifikats und der ID-Token-Zertifikatsinformationen der ersten Blockchain authentifiziert wird,
- auf eine erfolgreiche Terminal-Authentifizierung und eine erfolgreiche ID-Token-Authentifizierung hin, Freigabe des Zugriffs des Terminals auf das in dem ID-Token gespeicherte Attribut.

Ausführungsformen können den Vorteil haben, dass sie ein sicheres Verfahren zur Freigabe eines Zugriffs eines Terminals auf ein ID-Token ermöglichen, welches insbesondere ohne eine PKI auskommen kann. Hierbei kann der Zugriff des Terminals auf das Attribut in sicherer Weise durch den ID-Tokens kontrolliert werden. Die Gefahr eines unberechtigten Zugriffs auf das Attribut kann dadurch minimiert werden.

Es Authentifizieren sich zunächst sowohl der ID-Token, beispielsweise in Form einer Chipkarte, eines Smartphones, eines Wearables, als auch das Terminal, welches als Lesegerät des ID-Tokens dient, gegenseitig. Die Authentifizierung des Terminals durch den ID-Token wird als Terminal-Authentifizierung bzw. Terminal-Authentication bezeichnet. Die Authentifizierung des ID-Tokens durch das Terminal wird als ID-Token-Authentifizierung bzw. ID-Token-Authentication bezeichnet. Die gegenseitige Authentifizierung basiert auf ID-Token- und Terminal-Zertifikaten, welche jeweils einen statischen öffentlichen Schlüssel, d.h. einen statischen öffentlichen ID-Token- bzw. Terminal-Schlüssel umfassen. Diese statischen öffentlichen Schlüssel dienen beispielsweise als Signaturprüfschlüssel zur Prüfung von Signaturen, welche mit statischen privaten Schlüsseln, d.h. einem statischen privaten ID-Token- bzw. Terminal-Schlüssel, erstellt wurden. Dabei bilden der statische öffentlichen ID-Token-Schlüssel und der statische private ID-Token-Schlüssel zusammen ein asymmetrisches Schlüsselpaar, welches dem ID-Token zugeordnet ist. Der statische öffentlichen Terminal-Schlüssel und der statische private Terminal-Schlüssel bilden ferner zusammen ein asymmetrisches Schlüsselpaar, welches dem Terminal zugeordnet ist. Die privaten Schlüssel dienen beispielsweise jeweils zur Signatur einer Nachrichte, welche etwa eine Challenge bzw. Nonce umfassen, zum Zweck der Authentifizierung der Nachricht und Authentifizierung durch den jeweiligen Empfänger.

Bei Prüfungen einer PKI, z.B. durch einen Internet-Dienst, welchen ein Zertifikatsherausgeber (ZDA) betreibt, besteht die Gefahr, dass die ZDA, z.B. durch externe Angriffe, zu einem sog. "Single Point of Failure" wird und somit nicht mehr verfügbar ist. Durch die Verwendung der Blockchain-Technologie kann u.a. dieser Nachteil behoben werden, da die Blockchain ein dezentrales Paradigma hat und es Angreifern sehr schwer bzw. unmöglich macht das gesamte System auf allen Knoten zu manipulieren. In der Blockchain werden zu diesem Zweck alle Zertifikatsinformationen und deren Änderungen, wie etwa Ausgabe, Aktualisierung, Sperrung, gespeichert. Eine Signatur des Zertifikates durch einen Zertifikatsherausgeber bzw. durch eine Instanz einer zugehörigen PKI ist nicht notwendig. Die Gültigkeit bzw. Authentizität und Integrität des jeweiligen Zertifikats wird durch die Signatur der Transaktion in der Blockchain und der Transaktionsbestätigung durch die sog. Miner sichergestellt. Hierdurch wird es im Gegensatz zu bekannten PKIs möglich, veränderliche Werte in Zertifikaten abzubilden. Beispielsweise ist es möglich ein Inkrementieren eines Zählers zum Zweck der einmaligen oder n-maligen Zugangsbegrenzung zu implementieren.

Ein weiterer Vorteil der Verwendung der Blockchain-Technologie besteht in ihrer Offline-Fähigkeit. Eine Synchronisation der Blockchain erfolgt beispielsweise in festgelegten Intervallen, z.B. nur einmal am Tag durch Hinzufügung zusätzlich generierter Blöcke.

Ausführungsformen können ferner den Vorteil haben, dass sowohl für das Terminal-Zertifikat als auch für das ID-Token-Zertifikat jeweils Nutzungsinformationen in Form von Terminal-Zertifikatsinformationen und ID-Token-Zertifikatsinformationen bereitgestellt werden. Die entsprechenden Nutzungsinformationen werden dabei jeweils in einer Blockchain bereitgestellt. Nach Ausführungsformen sind die Zertifikate, d.h. Terminal-Zertifikat und ID-Token-Zertifikats, ebenfalls in der Blockchain gespeichert. Nach Ausführungsformen umfassen die Zertifikate jeweils die ihnen zugeordneten Zertifikatsinformationen. Nach Ausführungsformen sind die Zertifikate nicht in der Blockchain gespeichert, d.h. liegen als eigenständige Einheiten vor, während die Blockchain die Zertifikatsinformationen als Ergänzungen zu den Zertifikaten bereitstellt.

Das Bereitstellen von Nutzungsinformationen durch die Blockchain kann den Vorteil haben, dass die entsprechenden Nutzungsinformationen geändert werden können, ohne dass die Zertifikate selbst geändert werden. Genauer gesagt bleiben die Zertifikate in ihrer ursprünglichen Form, sei es als eigenständige Einheiten oder als Einträge in einer Blockchain, erhalten. Die von der Blockchain in (zusätzlichen) Blöcken bereitgestellten Zertifikatsinformationen ergänzen und/oder ersetzen die von den Zertifikaten umfassten Informationen. Bei bekannten Zertifikaten besteht das Problem, dass dieselben nach ihrer Ausstellung nicht mehr geändert werden können. So ist es beispielsweise schwierig ein Zertifikat auf eine vorbestimmte Zahl an Nutzungen zu beschränken, da es an Möglichkeiten fehlt, die Anzahl der Nutzungen eines entsprechenden Zertifikats nachzuverfolgen: Ein unveränderliches Zertifikat kann lediglich die entsprechende Nutzungszahl vorgeben. Anhand des Zertifikats ist jedoch bei einer konkreten Nutzung des Zertifikats nicht ersichtlich, wie viele Nutzungen bereits zuvor stattgefunden haben. Mit anderen Worten ist anhand des entsprechenden Zertifikats selbst nicht nachvollziehbar, ob die vorbestimmte Zahl an Nutzungen bereits ausgeschöpft wurde oder nicht.

Ausführungsformen können demgegenüber den Vorteil haben, dass anhand der Terminal-Zertifikatsinformationen oder der ID-Token-Zertifikatsinformationen Nutzungsbedingungen für das Terminal-Zertifikat und das ID-Token-Zertifikat festgelegt und deren Nutzung nachverfolgt werden kann.

In der Blockchain gespeicherte Zertifikatsinformationen ermöglichen es beispielsweise anhand von Nutzungsinformationen des Zertifikats nachzuvollziehen, ob bzw. wie oft das Zertifikat bereits genutzt wurde. Es kann mit einer entsprechenden Blockchain also ein Nutzungszähler allein auf Basis von Zertifikat und Zertifikatsinformationen implementiert werden.

Beispielsweise kann anhand der ID-Token-Zertifikatsinformationen festgelegt werden, wie oft der ID-Token für eine ID-Token-Authentifizierung gegenüber dem Terminal verwendet werden darf. Ferner kann durch die ID-Token-Zertifikatsinformation festgelegt werden, wie oft der ID-Token für eine ID-Token-Authentifizierung gegenüber einem Terminal verwendet werden darf.

Dabei kann sich die Anzahl der Nutzung auf Nutzungen gegenüber einem bestimmten Terminal, etwa einem bestimmten Terminal einer Mehrzahl von Terminals, oder auf Nutzungen gegenüber allen Terminals der Mehrzahl von Terminals beziehen. In ersterem Fall kann es sich bei der Blockchain um eine terminalindividuelle Blockchain handeln oder um eine redundant und dezentral auf allen Terminals der Mehrzahl von Terminals gespeicherte Blockchain, d.h. jedes der Terminals der Mehrzahl von Terminals umfasst eine Kopie der Blockchain und zusätzliche Blocks der Blockchain werden etwa durch die Terminals oder zusätzliche Blockchain-Server erstellt und an die (weiteren) Terminals verteilt. In letzterem Fall handelt es sich beispielsweise um eine redundant und dezentral auf allen Terminals der Mehrzahl von Terminals gespeicherte Blockchain.

Bei jeder ID-Token-Authentifizierung werden die entsprechenden ID-Token-Zertifikatsinformationen in der zweiten Blockchain aktualisiert, beispielsweise durch Hinzufügen zusätzlicher ID-Token-Zertifikatsinformationen in einem zusätzlichen Block der Blockchain. Der entsprechende zusätzliche Block der Blockchain wird beispielsweise auf ein Bereitstellen entsprechender neuer ID-Token-Zertifikatsinformationen hin generiert. Ist eine maximale vordefinierte Anzahl an ID-Token-Authentifizierungen mit einem ID-Token durchgeführt worden, so kann dies anhand der in der zweiten Blockchain gespeicherten ID-Token-Zertifikatsinformationen ermittelt werden und die Token-Authentifizierungen mit dem entsprechenden ID-Token gesperrt werden. Ferner kann die zweite Blockchain durch Hinzufügen eines zusätzlichen Blocks, welcher eine neue vordefinierte maximale Nutzungsanzahl für den entsprechenden ID-Token in Form von entsprechenden ID-Token-Zertifikatsinformationen umfasst, ein ID-Token, dessen bisherige maximale Zahl an ID-Token-Authentifizierungen ausgeschöpft wurde, für weitere ID-Token-Authentifizierungen freigeschaltet werden. Die entsprechende Freischaltung kann für das bzw. dieselben Terminals wie zuvor oder für weitere Terminals erfolgen.

Ebenso können für das Terminal-Zertifikat eines entsprechenden Terminals Terminal-Zertifikatsinformationen in einer ersten Blockchain verwendet werden, welche beispielsweise eine maximale Anzahl an Terminal-Authentifizierungen für das entsprechende Terminal festlegen. Hierbei kann sich die maximale Anzahl an Terminal-Authentifizierungen auf einen bestimmten ID-Token beziehen oder auf eine Mehrzahl von ID-Token. Beispielsweise werden bei jeder Terminal-Authentifizierung des Terminals gegenüber dem entsprechenden ID-Token zusätzliche Terminal-Zertifikatsinformationen erzeugt und der ersten Blockchain in einem zusätzlichen Block hinzugefügt, anhand derer sich die Anzahl der bisherigen Authentifizierungen durch das entsprechende Terminal nachverfolgen lässt. Ist die vordefinierte maximale Zahl von Terminal-Authentifizierungen für das entsprechende Terminal erreicht, so werden weitere Terminal-Authentifizierungen dieses Terminals gegenüber dem oder den ID-Token gesperrt. Durch Hinzufügen eines neuen Blocks zu der ersten Blockchain, welcher eine zusätzliche Terminal-Zertifikatsinformationen mit einer zusätzlichen maximalen Anzahl an Terminal-Authentifizierungen für das entsprechende Terminal umfasst, können Terminal-Authentifizierungen des Terminals gegenüber dem oder den ID-Token wieder freigeschaltet werden.

Bezieht sich die maximale Anzahl an Terminal-Authentifizierungen auf einen bestimmten ID-Token, kann es sich bei der Blockchain um eine ID-Token-individuelle Blockchain handeln oder um eine redundant und dezentral auf allen ID-Token einer Mehrzahl ID-Token gespeicherte Blockchain, d.h. jedes der ID-Token der Mehrzahl von ID-Token umfasst eine Kopie der Blockchain und zusätzliche Blocks der Blockchain werden etwa durch die ID-Token oder zusätzliche Blockchain-Server erstellt und an die (weiteren) ID-Token verteilt. Beispielsweise werden Nutzungen protokolliert und über ein Terminal (dasselbe Terminal oder ein als nächstes benutztes Terminal) an ein oder mehrere Blockchain-Server gesendet, welche die Blockchain unter Verwendung der protokollierten Nutzung um einen zusätzlichen Block erweitern. Die erweiterte Blockchain wird den ID-Token dann zur Aktualisierung über die Terminals bereitgestellt. Der ID-Token kann somit beispielsweise nach der nächsten erfolgreichen Authentifizierung die erste Blockchain durch die bereitgestellte erweiterte Blockchain aktualisieren. Im Falle einer Erweiterung der ersten Blockchain durch zusätzliche Blockchain-Server, kann der ID-Token die Terminal-Authentifizierungen zusätzlich in seinem Speicher protokollieren und bei einer Aktualisierung der ersten Blockchain prüfen, ob die protokollierten Nutzungen auch tatsächlich in die erweiterte Blockchain aufgenommen wurden. Wurden die protokollierten Nutzungen aufgenommen, können die entsprechenden zusätzlich protokollierten Nutzungen aus dem Speicher gelöscht werden, da diese ja von der Blockchain umfasst sind. Wurden die protokollierten Nutzungen nicht aufgenommen, kann eine Fehlermeldung erzeugt und gesendet werden, beispielsweise über ein Terminal an die Blockchain-Server.

Bezieht sich die maximale Anzahl an Terminal-Authentifizierungen auf eine Mehrzahl von ID-Token, kann es sich bei der Blockchain um eine entsprechende redundant und dezentral auf allen ID-Token der Mehrzahl von ID-Token gespeicherte Blockchain handeln.

Die Verwendung von Blockchains kann den Vorteil haben, dass eine Nutzung des Verfahrens insbesondere auch im Offlinemodus möglich ist. Da die Blockchains dezentral gespeichert werden, stehen die erste und zweite Blockchain auf dem ID-Token bzw. dem Terminal stets zur Verfügung unabhängig davon, ob der ID-Token bzw. das Terminal in aktiver Kommunikation mit anderen elektronischen Vorrichtungen, wie etwa den Mitgliedern eines Netzwerks stehen. Selbst im Falle einer redundanten Speicherung der Blockchains verursacht ein vorübergehender Ausfall der Netzwerkanbindung keinen vollständigen Ausfall des Systems, da die lokal gespeicherten Kopien der Blockchains auf den ID-Token bzw. den Terminals weiterhin zur Verfügung stehen.

Ausführungsformen können zudem den Vorteil haben, dass im Falle einer redundanten Speicherung der Blockchain selbst bei einem Ausfall einzelner Speicherorte weiterhin Kopien zur Verfügung stehen, womit die Gefahr eines "Single Point of Failure" vermieden werden kann.

Nach Ausführungsformen umfasst die Terminal-Authentifizierung ferner ein Verifizieren der Authentizität des Terminal-Zertifikats unter Verwendung der von der ersten Blockchain bereitgestellten Terminal-Zertifikatinformationen, wobei eine erfolgreiche Terminal-Authentifizierung eine erfolgreiche Verifizierung der Authentizität des Terminal-Zertifikats voraussetzt.

Ausführungsformen können den Vorteil haben, dass eine Authentifizierung des Terminal-Zertifikats nur unter Berücksichtigung der Terminal-Zertifikatsinformationen erfolgt. Nur wenn sich anhand der entsprechenden Terminal-Zertifikatsinformationen ergibt, dass die vorliegende Nutzung eines gültigen Terminal-Zertifikats in Übereinstimmung mit den durch die Terminal-Zertifikatsinformationen festgelegten Voraussetzungen erfolgt, wird ein Zugriff auf das in dem ID-Token gespeicherte Attribut gewährt.

Ausführungsformen können ferner den Vorteil haben, dass die Authentizität des Terminal-Zertifikats ohne PKI verifiziert werden kann. Beispielsweise sind das Zertifikat selbst und/oder ein Prüfwert desselben in der Blockchain gespeichert. Die Authentizität wird dabei durch die Eintragung in die Blockchain gewährleistet. Beispielsweise werden in die Blockchain nur Zertifikate eingetragen, deren Authentizität feststeht. Etwa wird ein Prüfwert des entsprechenden Zertifikats von der ausstellenden Instanz veröffentlicht. Es ist somit nur eine initiale Authentifizierung im Zuge des Eintrags in die Blockchain erforderlich. Sobald das Zertifikat und/oder sein Prüfwert in die Blockchain eingetragen sind, lässt sich die Authentizität des Zertifikats schnell und effektiv anhand der entsprechenden Terminal-Zertifikatinformationen verifizieren. Beispielsweise ist nur der Prüfwert des Zertifikats in die Blockchain eingetragen. In diesem Fall kann die Authentizität eines vorgelegten Zertifikats durch vergleich des Prüfwerts des vorgelegten Zertifikats mit dem gespeicherten Prüfwert verifiziert werden. Nach Ausführungsformen wird hierzu der Prüfwert des vorgelegten Zertifikats berechnet.

Nach Ausführungsformen umfasst die Übertragung eines Zertifikats nur die Übertragung eines Identifikators bzw. einer Kennung des entsprechenden Zertifikats, welches in einer der Blockchains gespeichert ist. Auf einen Empfang des Identifikators hin, wird das zugehörige Zertifikat unter Verwendung des Identifikators in der Blockchain identifiziert und aus der Blockchain ausgelesen. Dabei umfasst das Identifizieren des Zertifikats implizit ein Verifizieren der Authentizität, da diese eine Voraussetzung für die Eintragung ist.

Nach Ausführungsformen umfasst die Terminal-Authentifizierung ferner:

- Prüfen des Status des Terminal-Zertifikats unter Verwendung der von der ersten Blockchain bereitgestellten Terminal-Zertifikatinformationen.

Ausführungsformen können den Vorteil haben, dass unter Verwendung der ersten Blockchain beispielsweise geprüft werden kann, ob das Zertifikat gesperrt und/oder wieder entsperrt wurde. Ferner kann beispielsweise geprüft werden, ob das Zertifikat aufgebraucht und/oder abgelaufen ist. Zudem kann geprüft werden, ob seine Nutzungsberechtigungen erneuert und/oder seine Gültigkeit verlängert wurde. Beispielsweise kann der Nutzungsstatus geprüft werden, etwa ob eine aktuelle Nutzung des Terminal-Zertifikats zur Terminal-Authentifizierung noch innerhalb der Grenzen einer vordefinierten maximalen Anzahl an Terminal-Authentifizierungen für das entsprechende Terminal liegt.

Nach Ausführungsformen umfasst die ID-Token-Authentifizierung ferner:

- Verifizieren der Authentizität des ID-Token-Zertifikats unter Verwendung der von der zweiten Blockchain bereitgestellten ID-Token-Zertifikatinformationen, wobei eine erfolgreiche ID-Token-Authentifizierung eine erfolgreiche Verifizierung der Authentizität des ID-Token-Zertifikats voraussetzt.

Ausführungsformen können den Vorteil haben, dass eine Authentifizierung des ID-Token-Zertifikats nur unter Berücksichtigung der ID-Token-Zertifikatsinformationen erfolgt. Nur wenn sich anhand der entsprechenden ID-Token-Zertifikatsinformationen ergibt, dass die vorliegende Nutzung eines gültigen ID-Token-Zertifikats in Übereinstimmung mit den durch die ID-Token-Zertifikatsinformationen festgelegten Voraussetzungen erfolgt, wird ein Zugriff auf das in dem ID-Token gespeicherte Attribut gewährt.

Ausführungsformen können ferner den Vorteil haben, dass die Authentizität des ID-Token-Zertifikats ohne PKI verifiziert werden kann. Beispielsweise sind das Zertifikat selbst und/oder ein Prüfwert desselben in der Blockchain gespeichert. Die Authentizität wird dabei durch die Eintragung in die Blockchain gewährleistet. Beispielsweise werden in die Blockchain nur Zertifikate eingetragen, deren Authentizität feststeht. Etwa wird ein Prüfwert des entsprechenden Zertifikats von der ausstellenden Instanz veröffentlicht. Es ist somit nur eine initiale Authentifizierung im Zuge des Eintrags in die Blockchain erforderlich. Sobald das Zertifikat und/oder sein Prüfwert in die Blockchain eingetragen sind, lässt sich die Authentizität des Zertifikats schnell und effektiv anhand der entsprechenden ID-Token-Zertifikatinformationen verifizieren. Beispielsweise ist nur der Prüfwert des Zertifikats in die Blockchain eingetragen. In diesem Fall kann die Authentizität eines vorgelegten Zertifikats durch vergleich des Prüfwerts des vorgelegten Zertifikats mit dem gespeicherten Prüfwert verifiziert werden. Nach Ausführungsformen wird hierzu der Prüfwert des vorgelegten Zertifikats berechnet.

Nach Ausführungsformen umfasst die ID-Token-Authentifizierung ferner:

- Prüfen des Status des ID-Token-Zertifikats unter Verwendung der von der zweiten Blockchain bereitgestellten ID-Token-Zertifikatinformationen.

Ausführungsformen können den Vorteil haben, dass unter Verwendung der ersten Blockchain beispielsweise geprüft werden kann, ob das Zertifikat gesperrt und/oder wieder entsperrt wurde. Ferner kann beispielsweise geprüft werden, ob das Zertifikat aufgebraucht und/oder abgelaufen ist. Zudem kann geprüft werden, ob seine Nutzungsberechtigungen erneuert und/oder seine Gültigkeit verlängert wurde. Beispielsweise kann der Nutzungsstatus geprüft werden, etwa ob eine aktuelle Nutzung des ID-Token-Zertifikats zur ID-Token-Authentifizierung noch innerhalb der Grenzen einer vordefinierten maximalen Anzahl an ID-Token-Authentifizierungen für das entsprechende ID-Token liegt.

Nach Ausführungsformen umfasst das Terminal-Zertifikat einen dem Terminal zugeordneten statischen öffentlichen Terminal-Schlüssel, wobei in einem geschützten Speicherbereich des zweiten Speichers des Terminals ein statischer privater Terminal-Schlüssel gespeichert ist, welcher zusammen mit dem statischen öffentlichen Terminal-Schlüssel ein statisches asymmetrisches Terminal-Schlüsselpaar bildet. Die Terminal-Authentifizierung umfasst zum Bereitstellen des Terminal-Zertifikats ferner:

- Empfangen des Terminal-Zertifikats mit dem statischen öffentlichen Terminal-Schlüssel von dem Terminal durch den ID-Token.

Nach Ausführungsformen umfasst das ID-Token-Zertifikat einen dem ID-Token zugeordneten statischen öffentlichen ID-Token-Schlüssel, wobei in einem geschützten Speicherbereich des ersten Speichers des ID-Tokens ein statischer privater ID-Token-Schlüssel gespeichert ist, welcher zusammen mit dem statischen öffentlichen ID-Token-Schlüssel ein statisches asymmetrisches ID-Token-Schlüsselpaar bildet. Die ID-Token-Authentifizierung umfasst zum Bereitstellen des ID-Token-Zertifikats ferner:

- Empfangen des ID-Token-Zertifikats mit dem statischen öffentlichen ID-Token-Schlüssel von dem ID-Token durch den Terminal.

Nach Ausführungsformen wird das Terminal-Zertifikat mit dem statischen öffentlichen Terminal-Schlüssel von den Terminal-Zertifikatsinformationen umfasst und das Bereitstellen des Terminal-Zertifikats umfasst ein Empfangen eines Identifikators des Terminal-Zertifikats von dem Terminal durch den ID-Token, anhand dessen die zugehörigen Zertifikatsinformationen in der ersten Blockchain identifiziert und ausgelesen werden können. Nach Ausführungsformen wird das ID-Token-Zertifikat mit dem statischen öffentlichen ID-Token-Schlüssel von den ID-Token-Zertifikatsinformationen umfasst und das Bereitstellen des ID-Token-Zertifikats umfasst ein Empfangen eines Identifikators des ID-Token-Zertifikats von dem ID-Token durch das Terminal, anhand dessen die zugehörigen ID-Token-Zertifikatsinformationen in der zweiten Blockchain identifiziert und ausgelesen werden können.

Ein Identifikator bzw. eine Kennung ist ein mit einer bestimmten Identität verknüpftes Merkmal bzw. Wert zur eindeutigen Identifizierung der Person oder Objekts, wie etwa eines Zertifikats, welchem der Identifikator zugeordnet ist. Ein Identifikator kann beispielsweise Zahlen, Buchstaben, Sonderzeichen sowie Kombinationen aus diesen umfassen. Solche Kombinationen können nach Ausführungsformen auch beschreibende Angaben umfassen. Ein Identifikator kann ferner in Form eines Prüfwerts eines Objekts, insbesondere eines digitalen Objekts, vorliegen. Ein Identifikator kann ein einheitliches, eigenständiges Objekt identifizieren oder ein Gesamtobjekt, welches eine Mehrzahl von zu dem entsprechenden Gesamtobjekt gehörenden Teilobjekten umfasst. Hierbei sind die Teilobjekte unter Verwendung des Identifikators als zu dem Gesamtobjekt gehörenden identifizierbar.

Ein Prüfwert ist ein der Datei zugeordneter Wert, welcher die Datei derart eindeutig charakterisiert, dass die Integrität der Datei anhand des Prüfwerts überprüft werden kann. Ein Prüfwert in Form einer Prüfsumme stellt beispielsweise einen Wert bereit, welcher aus der Datei berechnet wurde und dazu konfiguriert ist, zumindest einen Bitfehler in den Daten der Datei zu erkennen. Je nachdem wie komplex die Berechnungsvorschrift für die Prüfsumme ist, können mehr als ein Fehler erkannt oder auch korrigiert werden. Bekannte Prüfwerte bzw. Prüfsummen können beispielsweise auf einem Aussummieren von datenwerten, einer Berechnung einer Quersumme, eines Paritätsbit, eines gewichteten Mittelwerts der Daten oder auf komplexeren Berechnungsverfahren beruhen, wie etwa einer zyklischen Redundanzprüfung oder der Verwendung einer Hashfunktion. Insbesondere kann es sich bei dem Kennwert um einen Hashwert der Datei handeln.

Nach Ausführungsformen erfolgt die Zugriffskontrolle in einem Offline-Modus des ID-Tokens und/oder des Terminals. Dabei kann der Offline-Modus störungsbedingt oder durch gezieltes Unterbrechen entsprechender Kommunikationsverbindungen verursacht sein.

Nach Ausführungsformen handelt es sich bei der ersten und zweiten Blockchain um eine gemeinsame Blockchain. In diesem Fall umfasst eine Blockchain sowohl Terminal-Zertifikatsinformationen als auch ID-Token-Zertifikatsinformationen.

Nach Ausführungsformen umfasst das Verfahren ferner: auf die Freigabe des Zugriffs auf das gespeicherte Attribut hin, Eintragen eines aktualisierten Nutzungszählers des Terminal-Zertifikats in die erste Blockchain, wobei der den aktualisierten Nutzungszähler umfassende Eintrag den Identifikator des Terminal-Zertifikats umfasst. Ausführungsformen können den Vorteil haben, dass die Anzahl an Nutzungen des Terminal-Zertifikats für Terminal-Authentifizierungen gegenüber einem oder mehreren ID-Token begrenzt werden kann. Soll das Terminal-Zertifikat nur für Terminal-Authentifizierungen gegenüber einem bestimmten ID-Token begrenzt werden, umfasst der Eintrag beispielsweise zudem den Identifikator des entsprechenden ID-Tokens.

Ausführungsformen können den Vorteil haben, dass durch den aktualisierten Nutzungszähler anhand der ersten Blockchain stets die aktuelle Anzahl an Nutzungen des entsprechenden Terminal-Zertifikats, d. h. die Anzahl der bisherigen Terminal-Authentifizierungen gegenüber dem oder den entsprechenden ID-Token, nachvollzogen werden können. Anhand des Identifikators des entsprechenden Terminal-Zertifikats kann der aktualisierte Nutzungszähler eindeutig dem entsprechenden Terminal-Zertifikat zugeordnet werden. Dies kann den Vorteil haben, dass die zweite Blockchain Nutzungszähler für eine Vielzahl von Terminal-Zertifikaten umfassen kann. Wird zudem ein Identifikator des oder der entsprechenden ID-Token hinzugefügt, können in der ersten Blockchain für ein und dasselbe Terminal eine Vielzahl von individuellen Nutzungszählern implementiert werden, welche jeweils die Anzahl der Nutzungen gegenüber einem oder mehreren ID-Token der Vielzahl von ID-Token, deren Identifikatoren umfasst sind, beschränken.

Nach Ausführungsformen geben die Terminal-Zertifikatsinformationen einen Anfangswert des Nutzungszählers vor und der Wert des Nutzungszählers wird bei jeder Aktualisierung dekrementiert wird, wobei das Terminal-Zertifikat seine Gültigkeit verliert, sobald der Nutzungszähler einen unteren Grenzwert erreicht. Nach Ausführungsformen geben die Terminal-Zertifikatsinformationen einen oberen Grenzwert für den Nutzungszähler vor und der Wert des Nutzungszählers wird bei jeder Aktualisierung inkrementiert, wobei das Terminal-Zertifikat seine Gültigkeit verliert, sobald der Nutzungszähler den oberen Grenzwert erreicht.

Nach Ausführungsformen umfasst die erste Blockchain in einem Block ein Programmmodul mit Programminstruktionen, wobei auf die Freigabe des Zugriffs auf das gespeicherte Attribut hin, das Programmmodul aufgerufen wird und die Programminstruktionen ausgeführt werden. Durch das Ausführen der Programminstruktionen wird das Aktualisieren des Nutzungszählers des Terminal-Zertifikats unter Verwendung der Terminal-Zertifikatsinformationen gesteuert.

Ausführungsformen können den Vorteil haben, dass das Aktualisieren des Nutzerzählers automatisch unter Verwendung der ersten Blockchain ablaufen kann. Veränderliche Werte der Zertifikate, d.h. des ID-Token-Zertifikats und des Terminal-Zertifikat, können somit über Programmmodule, beispielsweise in Form von sog. sog. Smart-Contracts, in der Blockchain abgebildet werden. Bei den Programmmodulen handelt es sich beispielsweise um automatisch ausführbare Programminstruktionen. Nach Ausführungsformen kann die erste Blockchain weitere Programmmodule mit weiteren Programminstruktionen umfassen, deren Ausführung beispielsweise das Ausführen der Terminal-Authentifizierung steuert. Hierzu wird das entsprechende Programmodul im Zuge bzw. zu Beginn der Terminal-Authentifizierung aufgerufen. Grundsätzlich können alle durch den ID-Token ausgeführte Verfahrensschritte von Ausführungsformen des hierin offenbarten Verfahrens durch Programmmodule mit entsprechenden Programminstruktionen gesteuert werden.

Nach Ausführungsformen umfasst das Verfahren ferner: auf die Freigabe des Zugriffs auf das gespeicherte Attribut hin, Eintragen eines aktualisierten Nutzungszählers des ID-Token-Zertifikats in die zweite Blockchain, wobei der den aktualisierten Nutzungszähler umfassende Eintrag einen Identifikator des ID-Token-Zertifikats umfasst. Ausführungsformen können den Vorteil haben, dass die Anzahl an Nutzungen des ID-Token-Zertifikats für ID-Token-Authentifizierungen gegenüber einem oder mehreren Terminals begrenzt werden kann. Soll das ID-Token-Zertifikat nur für ID-Token-Authentifizierungen gegenüber einem bestimmten Terminal begrenzt werden, umfasst der Eintrag beispielsweise zudem den Identifikator des entsprechenden Terminals.

Ausführungsformen können den Vorteil haben, dass durch den aktualisierten Nutzungszähler anhand der zweiten Blockchain stets die aktuelle Anzahl an Nutzungen des entsprechenden ID-Token-Zertifikats, d. h. die Anzahl der bisherigen ID-Token-Authentifizierungen gegenüber dem oder den entsprechenden Terminals, nachvollzogen werden können. Anhand des Identifikators des entsprechenden ID-Token-Zertifikats kann der aktualisierte Nutzungszähler eindeutig dem entsprechenden ID-Token-Zertifikat zugeordnet werden. Dies kann den Vorteil haben, dass die zweite Blockchain Nutzungszähler für eine Vielzahl von ID-Token-Zertifikaten umfassen kann. Wird zudem ein Identifikator des oder der entsprechenden Terminals hinzugefügt, können in der zweiten Blockchain für ein und denselben ID-Token eine Vielzahl von individuellen Nutzungszähler implementiert werden, welche jeweils die Anzahl der Nutzungen gegenüber einem oder mehreren Terminals der Vielzahl von Terminals, deren Identifikatoren umfasst sind, beschränken.

Nach Ausführungsformen geben die ID-Token-Zertifikatsinformationen einen Anfangswert des Nutzungszählers vor und der Wert des Nutzungszählers wird bei jeder Aktualisierung dekrementiert, wobei das ID-Token-Zertifikat seine Gültigkeit verliert, sobald der Nutzungszähler einen unteren Grenzwert erreicht. Nach Ausführungsformen geben die ID-Token-Zertifikatsinformationen einen oberen Grenzwert für den Nutzungszähler vor und der Wert des Nutzungszählers wird bei jeder Aktualisierung inkrementiert, wobei das ID-Token-Zertifikat seine Gültigkeit verliert, sobald der Nutzungszähler den oberen Grenzwert erreicht.

Nach Ausführungsformen umfasst die zweite Blockchain in einem Block ein Programmmodul mit Programminstruktionen, wobei auf die Freigabe des Zugriffs auf das gespeicherte Attribut hin, das Programmmodul aufgerufen wird und die Programminstruktionen ausgeführt werden. Durch das Ausführen der Programminstruktionen wird das Aktualisieren des Nutzungszählers des ID-Token-Zertifikats unter Verwendung der ID-Token-Zertifikatsinformationen gesteuert.

Ausführungsformen können den Vorteil haben, dass das Aktualisieren des Nutzerzählers automatisch unter Verwendung der zweiten Blockchain erfolgen kann. Bei den Programmmodulen handelt es sich beispielsweise um automatisch ausführbare Programminstruktionen. Nach Ausführungsformen kann die zweite Blockchain weitere Programmmodule mit weiteren Programminstruktionen umfassen, deren Ausführung beispielsweise das Ausführen der ID-Token-Authentifizierung steuert. Hierzu wird das entsprechende Programmodul im Zuge bzw. zu Beginn der ID-Token-Authentifizierung aufgerufen. Grundsätzlich können alle durch das Terminal ausgeführte Verfahrensschritte von Ausführungsformen des hierin offenbarten Verfahrens durch Programmmodule mit entsprechenden Programminstruktionen gesteuert werden.

Nach Ausführungsformen synchronisiert der ID-Token die erste Blockchain auf die Freigabe des Zugriffs auf das gespeicherte Attribut hin über das Terminal und ein mit dem Terminal verbundenes Netzwerk. Ausführungsformen können den Vorteil haben, dass sie eine dezentrale und redundante Speicherung der Blockchain ermöglichen. Insbesondere kann die erste Blockchain Terminal-Zertifikatsinformationen, wie beispielsweise Nutzungsinformationen des Terminal-Zertifikats über Nutzungen des entsprechenden Terminal-Zertifikats gegenüber einer Mehrzahl von ID-Token, umfassen.

Nach Ausführungsformen ist der ID-Token als mobiles, tragbares Kommunikationsgerät, wie beispielsweise ein Smartphone, konfiguriert, wobei das mobile, tragbare Kommunikationsgerät eine Funkschnittstelle zur Kommunikation über ein Funknetzwerk umfasst, und wobei der ID-Token die erste Blockchain auf die Freigabe des Zugriffs auf das gespeicherte Attribut hin über das Funknetzwerk synchronisiert.

Nach Ausführungsformen synchronisiert das Terminal die zweite Blockchain über das Netzwerk. Ausführungsformen können den Vorteil haben, dass sie eine dezentrale und redundante Speicherung der Blockchain ermöglichen. Insbesondere kann die zweite Blockchain ID-Token-Zertifikatsinformationen, wie beispielsweise Nutzungsinformationen des ID-Token-Zertifikats über Nutzungen des entsprechenden ID-Token-Zertifikats gegenüber einer Mehrzahl von Terminals, umfassen.

Nach Ausführungsformen synchronisiert das Terminal die erste und/oder zweite Blockchain zu vordefinierten Zeitpunkten über das Netzwerk.

Nach Ausführungsformen umfasst die erste Blockchain eine Mehrzahl von Terminal-Zertifikatsinformationen zu einer Mehrzahl von Terminal-Zertifikaten einer Mehrzahl von Terminals. Nach Ausführungsformen umfasst die zweite Blockchain eine Mehrzahl von ID-Token-Zertifikatsinformationen zu einer Mehrzahl von ID-Token-Zertifikaten einer Mehrzahl von ID-Token.

Nach Ausführungsformen umfassen die Terminal-Zertifikatsinformationen einen Identifikator des Terminal-Zertifikats und einen Prüfwert des Terminal-Zertifikats. Nach Ausführungsformen umfassen die ID-Token-Zertifikatsinformationen einen Identifikator des ID-Token-Zertifikats und einen Prüfwert des ID-Token-Zertifikats umfassen. Ausführungsformen können den Vorteil haben, dass sich Terminal-Zertifikat bzw. das ID-Token-Zertifikat anhand der Terminal-Zertifikatsinformationen bzw. ID-Token-Zertifikatsinformationen eindeutig identifiziert und auf Authentizität sowie Integrität geprüft werden kann.

Ausführungsformen können den Vorteil haben, dass anhand des Prüfwerts des Terminal-Zertifikats durch den ID-Token unter Verwendung der Terminal-Zertifikatsinformation geprüft werden kann, ob es sich bei einem vorliegenden Zertifikat um ein gültiges, unverfälschtes Terminal-Zertifikat handelt. Ebenso kann anhand des Prüfwerts des ID-Token-Zertifikats durch das Terminal geprüft werden, ob ein vorliegendes ID-Token-Zertifikat gültig und unverfälscht ist.

Nach Ausführungsformen wird zum Sperren des Terminal-Zertifikats ein erster Sperreintrag in die erste Blockchain eingetragen, wobei der erste Sperreintrag den Identifikator des Terminal-Zertifikats umfasst. Nach Ausführungsformen wird zum Sperren des ID-Tokens ein zweiter Sperreintrag in die zweite Blockchain eingetragen, wobei der zweite Sperreintrag den Identifikator des ID-Token-Zertifikats umfasst.

Ausführungsformen können den Vorteil haben, dass sie eine Sperrung des Terminal-Zertifikats und/oder des ID-Token-Zertifikats unter Verwendung der Blockchain ermöglichen. Anhand der ersten Blockchain kann geprüft werden kann, ob das entsprechende Terminal gesperrt ist, und/oder anhand der zweiten Blockchain kann geprüft werden, ob der ID-Token gesperrt ist. Eine Speicherung der entsprechenden Sperrinformationen in den entsprechenden Blockchains kann ferner den Vorteil haben, dass sie dezentral und redundant erfolgen kann, wodurch die Störanfälligkeit reduziert werden kann. Zudem ermöglich eine Implementierung der Sperrung unter Verwendung der Blockchains, dass die entsprechenden Zertifikate durch zusätzliche Entsperrungseinträge auch wieder entsperrt werden können.

Nach Ausführungsformen definieren die Terminal-Zertifikatsinformationen Berechtigungen des Terminals. Nach Ausführungsformen definieren die ID-Token-Zertifikatsinformationen Berechtigungen des ID-Tokens. Bei diesen Berechtigungen kann es sich beispielsweise um Lese- und/oder Schreibberechtigungen des Terminals bzw. des ID-Tokens handeln.

Nach Ausführungsformen definieren die Terminal-Zertifikatsinformationen Berechtigungen des Terminals und eine Änderung der Berechtigungen des Terminals wird als Eintrag zu der ersten Blockchain hinzugefügt, wobei der entsprechende Eintrag den Identifikator des Terminal-Zertifikats umfasst. Nach Ausführungsformen definieren die ID-Token-Zertifikatsinformationen Berechtigungen des ID-Token und eine Änderung von Berechtigungen des ID-Tokens wird als Eintrag zu der zweiten Blockchain hinzugefügt, wobei der entsprechende Eintrag den Identifikator des ID-Token-Zertifikats umfasst.

Ausführungsformen können den Vorteil haben, dass Berechtigungen des Terminals und/oder des ID-Tokens geändert werden können. Ferner kann anhand der von den Terminal-Zertifikatsinformationen umfassten Berechtigungen des Terminals geprüft werden, ob das entsprechende Terminal zu einem Zugriff auf das in dem ID-Token gespeicherte Attribut berechtigt ist. Die Speicherung der entsprechenden Berechtigungen in einem Block der ersten Blockchain hat den Vorteil, dass die entsprechenden Berechtigungen durch Einträge in weiteren Blöcken der ersten Blockchain geändert werden können. Eine solche Änderungsmöglichkeit bieten bekannte Berechtigungszertifikate, welche keine Änderungen zulassen, nicht.

Nach einer Ausführungsform werden auf eine erfolgreiche Terminal-Authentifizierung hin zusätzliche Terminal-Zertifikatsinformationen zu der ersten Blockchain hinzugefügt, welche die erfolgreiche Terminal-Authentifizierung protokollieren. Beispielsweise umfassen die zusätzlichen Terminal-Zertifikatsinformationen einen Zugriffstoken. Ausführungsformen der Erfindung können den Vorteil haben, dass bei einer zukünftigen Terminal-Authentifizierung eine aufwendige vollständige Signaturprüfung vermieden werden kann. Stattdessen genügt ein Vergleich eines empfangenen Zugriffstokens mit dem als gültig hinterlegten Zugriffstoken, um die Gültigkeit des empfangenen Zugriffstokens zu verifizieren. Dies kann eine vereinfachte, schnellere Terminal-Authentifizierung bei gleichzeitiger Gewährleistung der Sicherheit ermöglichen.

Unter einem "Zugriffstoken" wird im Folgenden ein Softwareelement verstanden, welches dazu konfiguriert ist eine Zugriffsberechtigung auf eine Informatikeinrichtung, wie einen Computer, Server, Terminal, Chipkarte nachzuweisen. Insbesondere kann es sich bei dem Zugriffstoken um ein Softwareelement handeln, für welches eine Zugriffsberechtigung durch die Informatikeinrichtung verifiziert wurde und welches auf der Informatikeinrichtung hinterlegt ist. Bei einem Zugriffstoken kann es sich beispielsweise um ein Zertifikat oder einen aus einem Zertifikat abgeleiteten Hash-Wert handeln. Nach Ausführungsformen umfasst der Hash-Wert einen Hash von Metadaten des Zertifikats.

Nach einer Ausführungsform werden auf eine erfolgreiche ID-Token-Authentifizierung hin zusätzliche ID-Token-Zertifikatsinformationen zu der zweiten Blockchain hinzugefügt, welche die erfolgreiche ID-Token-Authentifizierung protokollieren. Beispielsweise umfassen die zusätzlichen ID-Token-Zertifikatsinformationen einen Zugriffstoken. Ausführungsformen der Erfindung können den Vorteil haben, dass bei einer zukünftigen ID-Token-Authentifizierung eine aufwendige vollständige Signaturprüfung vermieden werden kann. Stattdessen genügt ein Vergleich eines empfangenen Zugriffstokens mit dem als gültig hinterlegten Zugriffstoken, um die Gültigkeit des empfangenen Zugriffstokens zu verifizieren. Dies kann eine vereinfachte, schnellere ID-Token-Authentifizierung bei gleichzeitiger Gewährleistung der Sicherheit ermöglichen.

Nach Ausführungsformen umfasst eine vereinfachte Terminal-Authentifizierung auf einen Empfang eines Zugriffstokens von dem Terminal durch den ID-Token hin ein automatisches Prüfen, ob der Zugriffstoken in der ersten Blockchain gültig gespeichert ist. Im Fall, dass der Zugriffstoken in der ersten Blockchain gültig gespeichert ist, erfolgt eine Freigabe eines Zugriffs des Terminals auf das in dem ID-Token gespeicherte Attribut unter der Voraussetzung einer erfolgreichen ID-Token-Authentifizierung. Im Fall, dass der Zugriffstoken in der ersten Blockchain nicht gültig gespeichert ist, erfolgt eine vollständige Terminal-Authentifizierung.

Nach Ausführungsformen umfasst eine vereinfachte ID-Token-Authentifizierung auf einen Empfang eines Zugriffstokens von dem ID-Token durch das Terminal hin ein automatisches Prüfen, ob der Zugriffstoken in der zweiten Blockchain gültig gespeichert ist. Im Fall, dass der Zugriffstoken in der zweiten Blockchain gültig gespeichert ist, erfolgt eine Freigabe eines Zugriffs des Terminals auf das in dem ID-Token gespeicherte Attribut. Im Fall, dass der Zugriffstoken in der zweiten Blockchain nicht gültig gespeichert ist, erfolgt eine vollständige ID-Token-Authentifizierung.

Ausführungsformen der Erfindung können den Vorteil haben, dass die Geschwindigkeit, mit welcher die Zugriffskontrolle seitens des ID-Tokens erfolgt, trotz der hohen Sicherheit schnell sein kann, da nicht für jeden Zugriffsversuch des Terminals auf das Attribut die oben beschriebenen Signaturprüfungen durchgeführt werden müssen. Solange ein gültiges übereinstimmendes Zugriffstoken, beispielsweise in Form eines Hash-Werts, in dem ID-Token gespeichert ist, wird eine Signaturprüfung vermieden. So entfallen beispielsweise damit verbunden zeit- und energieaufwendige elliptische Kurvenoperationen. Vielmehr wird ein schneller Speicherzugriff auf einen entsprechenden Speicherbereich des ID-Tokens ermöglicht, was nach Prüfung der Gültigkeit des Zugriffstokens in dem ID-Token ohne weitere Prüfung beispielsweise eines statischen Zertifikats des Terminals den Zugriff auf die in dem ID-Token gespeicherten Attribute erlaubt.

Nach Ausführungsformen legt der Zugriffstoken fest, wie und auf welche Attribute das Terminal Zugriff erhält. Beispielsweise kann dies über ein Terminal-Zertifikat festgelegt werden, aus welchem das Zugriffstoken in Form eines Hash-Werts abgeleitet wird. Die Zugriffsberechtigung wird nach Ausführungsformen von Metadaten des Zertifikats umfasst, deren Hash von dem abgeleiteten Hash-Wert mit umfasst wird. Beispielsweise können spezifische Attribute angegeben werden, sodass insgesamt nicht ein Vollzugriff auf sämtliche im ID-Token gespeicherten Attribute erfolgt, sondern nur auf eine beschränkte Auswahl hiervon. Ferner kann die Zugriffsberechtigung eine Angabe dahingehend enthalten sein, ob nur ein Lesezugriff oder ein Lese- und Schreibzugriff gegeben ist.

Nach Ausführungsformen ist der statische öffentliche Terminal-Schlüssel des Terminals dem Terminal-Zertifikat zugeordnet, dessen Hash-Wert den Zugangstoken bildet. Der statische öffentliche Schlüssel wird verknüpft mit dem Hash-Wert in der ersten Blockchain gespeichert und eine weitere Kommunikation mit dem Terminal erfolgt verschlüsselt unter Verwendung des statischen öffentlichen Terminal-Schlüssel. Zum Beispiel ist der statische öffentliche Terminal-Schlüssel in dem Terminal-Zertifikat enthalten, wobei der abgeleitete Hash-Wert einen Hash des statischen öffentlichen Schlüssels umfasst.

Dies kann den Vorteil haben, dass die Geschwindigkeit der Terminal-Authentifizierung durch den ID-Token weiter erhöht wird. Im Falle, dass ein gültiger Zugangstoken, z.B. Hash-Wert, in dem ID-Token gespeichert ist, entfällt ein erneuter Austausch in Form einer Datenübertragung des statischen öffentlichen Terminal-Schlüssels. Der gespeicherte statische öffentliche Terminal-Schlüssel kann von dem ID-Token direkt aus der ersten Blockchain gelesen und für die weitere Kommunikation mit dem Terminal verwendet werden.

Nach einer Ausführungsform wird der Zugriffstoken mit einem Zeitstempel verknüpft. Nach einer Ausführungsform wird der Zugriffstoken einer vordefinierten relativen Gültigkeitsdauer zugeordnet.

Die besagte relative Gültigkeitsdauer kann beispielsweise eine Zeitdauer wie ein Jahr, sechs Monate, 24 Stunden umfassen. Beispielsweise wird mit dem Speichern des Zugriffstokens eine Systemzeit des Terminals oder des ID-Tokens herangezogen und die relative Gültigkeitsdauer der Systemzeit hinzuaddiert. Hieraus ergibt sich die maximale Gültigkeitsdauer in Form eines absoluten Zeitwertes, z.B. eines Ablaufdatums oder einem Ablaufzeitpunkt. Umfasst der Zugriffstoken Metadaten in Form eines Zeitstempels, kann damit die Gültigkeitsdauer des Zugriffs des Terminals auf das Attribut des ID-Tokens ausgehend von einem initialen Zeitpunkt für eine bestimmte Zeitdauer ohne weitere Authentifizierung durchgeführt werden. Eine vollständige Authentifizierung erfolgt in diesem Fall nicht ständig, sondern nur zu vordefinierten Zeitpunkten, welche durch die relative Gültigkeitsdauer vorgegeben werden. Dabei legt das Terminal, welches die Metadaten bereitstellt, selbst fest, in welchen zeitlichen Abständen eine vollständige Authentifizierung des Terminals durch den ID-Token zu erfolgen hat. Alternativ oder zusätzlich legt der ID-Token, falls dieser Metadaten bereitstellt, selbst fest, in welchen zeitlichen Abständen eine vollständige Authentifizierung des ID-Tokens durch das Terminal zu erfolgen hat.

Nach einer Ausführungsform wird das Zugriffstoken in einer ersten Nachricht von dem Terminal an den ID-Token gesendet, wobei die erste Nachricht ein Wurzelzertifikat umfasst, wobei im Falle, dass kein gültiges zweites Zugriffstoken in dem ID-Token gespeichert ist, die Authentifizierung durch den ID-Token ferner ein Verifizieren des Zugriffstokens über das Wurzelzertifikat mittels eines in dem ID-Token gespeicherten öffentlichen Schlüssels einer Wurzelzertifizierungsstelle umfasst, wobei erst nach erfolgreicher Verifizierung des Zugriffstokens über das Wurzelzertifikat das Speichern des Zugriffstokens und das Freigeben des Zugriffs des Terminals auf das Attribut erfolgt.

Beispielsweise wird das statische Zertifikat des Terminals über das Wurzelzertifikat mittels eines in dem ID-Token gespeicherten öffentlichen Schlüssels einer Wurzelzertifizierungsstelle verifiziert, wobei erst nach erfolgreicher Verifizierung des statischen Zertifikats des Terminals über das Wurzelzertifikat das Speichern des Hash-Wertes als Zugriffstoken in dem ID-Token und die Freigabe des Zugriffs des Terminals auf das Attribut erfolgt.

Dies kann den Vorteil haben, dass durch eine zentrale vertrauenswürdige Instanz, d.h. eine Wurzelzertifizierungsstelle, festgelegt werden kann, in welcher Weise der Zugriff auf das Attribut erfolgen kann. Ein Wurzelzertifikat, auch als Stammzertifikat bezeichnet, ist ein unsigniertes Public-Key-Zertifikat oder selbstsigniertes Zertifikat einer Wurzelzertifizierungsstelle, das dazu dient, die Gültigkeit aller untergeordneten Zertifikate zu validieren. Wurzelzertifikate sind ein wichtiger Bestandteil eines Public-Key-Infrastruktursystems (PKI-Systems) und implizit vertrauenswürdig. Ein Wurzelzertifikat basiert beispielsweise auf dem ISO X.509-Standard. Mit einer PKI-Infrastruktur bzw. PKI-System wird ein System bezeichnet, welches digitale Zertifikate ausstellen, verteilen und prüfen kann. Die innerhalb einer PKI ausgestellten Zertifikate werden zur Absicherung rechnergestützter Kommunikation verwendet.

Da üblicherweise der Wurzelzertifizierungsstelle sowohl von dem ID-Token als auch dem Terminal vertraut wird, kann der ID-Token davon ausgehen, dass sämtliche in den Metadaten enthaltenen Informationen als vertrauenswürdig anzusehen sind. Befinden sich in bzw. auf dem ID-Token beispielsweise sensible persönliche Informationen wie ein Geburtsdatum, biometrische Informationen, eine Wohnadresse und dergleichen, muss ein Nutzer des ID-Tokens keine Sorge haben, dass das Terminal unbefugt in Besitz dieser Attribute gelangen könnte. Durch die Absicherung über eine zentrale Wurzelzertifizierungsstelle ist insofern sichergestellt, dass ein Missbrauch des ID-Tokens durch das Terminal effektiv unterbunden werden kann.

Nach Ausführungsformen umfasst die Terminal-Authentifizierung ferner:

- Empfangen einer ersten Nachricht von dem Terminal durch den ID-Token, wobei die erste Nachricht eine erste unter Verwendung des statischen privaten Terminal-Schlüssels erzeugte Signatur aufweist,
- Verifizieren der Authentizität der ersten Nachricht, wobei das Verifizieren der ersten Nachricht ein Verifizieren der ersten Signatur unter Verwendung des von dem Terminal-Zertifikat umfassten statischen öffentlichen Terminal-Schlüssels umfasst.

Nach Ausführungsformen umfasst die Terminal-Authentifizierung ferner:

- Erzeugen eines zufälligen ersten Geheimnisses durch den ID-Token,
- Senden des zufälligen ersten Geheimnisses durch den ID-Token an das Terminal,

wobei die erste Nachricht in Antwort auf das Senden des zufälligen ersten Geheimnisses empfangen wird und das gesendete zufällige erste Geheimnisse umfasst,
wobei das Verifizieren der ersten Signatur ferner unter Verwendung des zufälligen ersten Geheimnisses erfolgt.

Ausführungsformen können den Vorteil haben, dass sie eine sichere und effektive Terminal-Authentifizierung ermöglichen.

Nach Ausführungsformen umfasst die ID-Token-Authentifizierung ein Erzeugen eines gemeinsamen, geteilten Geheimnisses von ID-Token und Terminal, wobei das Erzeugen des gemeinsamen, geteilten Geheimnisses umfasst:

- Erzeugen eines ephemeren asymmetrischen Terminal-Schlüsselpaars durch das Terminal umfasst, wobei das erzeugte asymmetrische Terminal-Schlüsselpaar einen ephemeren öffentlichen Terminal-Schlüssel und einen ephemeren privaten Terminal-Schlüssel umfasst,
- Erzeugen des gemeinsamen, geteilten Geheimnisses durch das Terminal unter Verwendung des ephemeren privaten Terminal-Schlüssels und des statischen öffentlichen ID-Token-Schlüssels,
- Senden des ephemeren öffentlichen Terminal-Schlüssels durch das Terminal an den ID-Token,
- Erzeugen des gemeinsamen, geteilten Geheimnisses durch den ID-Token unter Verwendung des statischen privaten ID-Token-Schlüssels und des empfangenen ephemeren öffentlichen Terminal-Schlüssels.

Nach Ausführungsformen umfasst die ID-Token-Authentifizierung ferner:

- Empfangen eines zufälligen zweiten Geheimnisses von dem ID-Token durch das Terminal,
- Empfangen einer zweiten Nachricht von dem ID-Token durch das Terminal, wobei die zweite Nachricht eine zweite unter Verwendung eines gemeinsamen Signaturschlüssels erzeugte Signatur aufweist, wobei der gemeinsamen Signaturschlüssel unter Verwendung des gemeinsamen, geteilten Geheimnisses und des zufälligen zweiten Geheimnisses erzeugt ist,
- Erzeugen des gemeinsamen Signaturschlüssels durch das Terminal unter Verwendung des erzeugten gemeinsamen, geteilten Geheimnisses und des empfangenen zufälligen zweiten Geheimnisses,
- Verifizieren der Authentizität der zweiten Nachricht, wobei das Verifizieren der zweiten Nachricht ein Verifizieren der zweiten Signatur unter Verwendung empfangenen zufälligen zweiten Geheimnisses und des durch das Terminal erzeugten gemeinsamen Signaturschlüssels umfasst.

Ausführungsformen können den Vorteil haben, dass sie eine sichere und effektive ID-Token-Authentifizierung ermöglichen. Ferner können das gemeinsame, geteilte Geheimnis und das empfangene zufällige zweite Geheimnis dazu verwendet werden, einen gemeinsamen symmetrischen kryptographischen Schlüssel zu erzeugen. Der gemeinsame Signaturschlüssel sowie der gemeinsame symmetrische kryptographische Schlüssel können zur Implementierung einer kryptographisch gesicherten Kommunikation zwischen ID-Token und Terminal verwendet werden. Diese kryptographisch gesicherte Kommunikation kann zum Lesezugriff des Terminals auf das von dem ID-Token bereitgestellte Attribut verwendet werden. Beispielsweise umfasst die kryptographisch gesicherte Kommunikation ein Secure-Messaging-Verfahren. Ausführungsformen können den Vorteil haben, dass durch die ID-Token-Authentifizierung ein sicherer Kommunikationskanal mit einer Ende-zu-Ende-Verschlüsselung zwischen dem ID-Token und dem Terminal aufgebaut werden kann.

Nach Ausführungsformen führt das Terminal das Erzeugen des ephemeren asymmetrischen Terminal-Schlüsselpaars bereits im Zuge der Terminal-Authentifizierung aus, wobei das Terminal den ephemeren öffentlichen Terminal-Schlüssel an den ID-Token sendet. Zusätzlich umfasst die erste Nachricht den ephemeren öffentlichen Terminal-Schlüssel, wobei das Verifizieren der ersten Signatur ferner unter Verwendung des ephemeren öffentlichen Terminal-Schlüssels erfolgt. Der ID-Token vergleicht zum Verifizieren der Authentizität des ephemeren öffentlichen Terminal-Schlüssels den zum Verifizieren der ersten Nachricht verwendeten ephemeren öffentlichen Terminal-Schlüssel mit dem im Zuge der ID-Authentifizierung empfangenen ephemeren öffentlichen Terminal-Schlüssel, um die Authentizität des empfangenen ephemeren öffentlichen Terminal-Schlüssel zu verifizieren.

Ausführungsformen können den Vorteil, dass das Verfahren sicherer und effizienter gestaltet werden kann.

Ausführungsformen betreffen ein System zur Kontrolle eines Zugriffs eines Terminals auf ein in einem ID-Token gespeichertes Attribut, welches umfasst:

- den ID-Token mit einer ersten Kommunikationsschnittstelle, einem ersten Prozessor und einem ersten Speicher, wobei der erste Speicher computerlesbare erste Instruktionen enthält, wobei Terminal-Zertifikatsinformationen zu einem dem Terminal zugeordneten Terminal-Zertifikat in einem oder mehreren Einträgen einer ersten Blockchain gespeichert sind, wobei die erste Blockchain in dem ersten Speicher gespeichert ist,
- das Terminal mit einer zweiten Kommunikationsschnittstelle, einem zweiten Prozessor und einem zweiten Speicher, wobei der zweite Speicher computerlesbare zweite Instruktionen enthält, wobei ID-Token-Zertifikatsinformationen zu einem dem ID-Token zugeordneten ID-Token-Zertifikat in einem oder mehreren Einträgen einer zweiten Blockchain gespeichert sind, wobei die zweite Blockchain in dem zweiten Speicher gespeichert ist,

wobei die erste und zweite Kommunikationsschnittstelle dazu konfiguriert sind, miteinander zu kommunizieren, und wobei der erste Prozessor bei einem Ausführen der ersten Instruktionen den ID-Token so steuert, dass der ID-Token gemeinsam mit dem Terminal ein Verfahren nach einer der vorhergehenden Ausführungsformen ausführt, und wobei der zweite Prozessor bei einem Ausführen der zweiten Instruktionen das Terminal so steuert, dass das Terminal gemeinsam mit dem ID-Token ein Verfahren nach einer der vorhergehenden Ausführungsformen ausführt.

Das System ist dazu konfiguriert eine oder mehrere der vorangehenden Ausführungsformen des Verfahrens auszuführen.

Ausführungsformen betreffen ein Verfahren zur Freigabe eines Zugangs zu einer Sicherungseinrichtung, welche den Zugang zu beschränkten Ressourcen regelt, mittels eines ID-Tokens und eines Terminals, wobei das Verfahren umfasst:

- Durchführen des Verfahrens nach einer der vorhergehenden Ausführungsformen durch den ID-Token und das Terminal,
- auf die Freigabe des Zugriffs des Terminals auf das dem ID-Token gespeicherte Attribut hin, Auslesen des Attributs durch das Terminal,
- Verifizieren des ausgelesenen Attributs durch das Terminal, wobei Terminal im Falle eines erfolgreichen Verifizierens des Attributs den Zugang zu der Sicherungseinrichtung freigibt.

Ausführungsformen betreffen ein Sicherungssystem, welches ein System nach einer der vorhergehenden Ausführungsformen und eine Sicherungseinrichtung umfasst, welche den Zugang zu beschränkten Ressourcen regelt, wobei das Ausführen der zweiten Instruktionen durch den zweiten Prozessor das Terminal ferner dazu veranlassen, auf die Freigabe des Zugriffs des Terminals auf das dem ID-Token gespeicherte Attribut hin, das Attribut auszulesen, das ausgelesene Attributs zu verifizieren und im Falle eines erfolgreichen Verifizierens des Attributs den Zugang zu der Sicherungseinrichtung freizugeben.

Das Sicherungssystem ist dazu konfiguriert eine oder mehrere der vorangehenden Ausführungsformen des Verfahrens auszuführen.

Nach Ausführungsformen umfasst die Sicherungseinrichtung eine Verriegelungsvorrichtung und die Sicherungseinrichtung ist dazu konfiguriert, auf eine Freigabe des Zugangs zu der Sicherungseinrichtung hin, die Verriegelungsvorrichtung zu entriegeln.

Unter einem "Zertifikat" wird hier ein digitales Zertifikat bzw. eine digitale Datenstruktur verstanden, welche einen öffentlichen kryptographischen Schlüssel einer Person oder einem Objekt zuordnet. Hierzu kann das Zertifikat den entsprechenden öffentlichen kryptographischen Schlüssel umfassen. Ferner kann ein Zertifikat dazu dienen die Authentizität und Integrität des entsprechenden öffentlichen kryptographischen Schlüssels zu bestätigen. Darüber hinaus kann das Zertifikat noch weitere Eigenschaften des entsprechenden öffentlichen kryptographischen Schlüssels bestätigen. Diese weiteren Eigenschaften umfassen beispielsweise Informationen zur Gültigkeitsdauer des Zertifikates, Informationen zu den Regeln und Verfahren, unter denen das Zertifikat ausgegeben bzw. erstellt wurde, Informationen zu der Person bzw. dem Objekt, welchem der entsprechende öffentlichen kryptographischen Schlüssel zugeordnet ist, Angaben zum zulässigen Anwendungs- und Geltungsbereich des öffentlichen kryptographischen Schlüssels. Ferner können die Eigenschaften zudem Informationen über den Aussteller des Zertifikates und gegebenenfalls eine digitale Signatur des Ausstellers über alle Informationen des Zertifikats umfassen. Ein Berechtigungszertifikat umfasst ferner Informationen zu Rechten der Person bzw. des Objekts, welchem der öffentliche kryptographische Schlüssel zugeordnet ist. Bei diesen Rechten handelt es sich beispielsweise um Lese und/oder Schreibrechte, etwa um Rechte zum Lesen und/oder Schreiben von Attributen aus bzw. in einen Speicher eines ID-Tokens, insbesondere einen geschützten Speicherbereich eines entsprechenden Speichers.

Bei einem digitalen Zertifikat kann es sich beispielsweise um einen Eintrag in einen Block einer Blockchain handeln, welcher einen öffentlichen kryptographischen Schlüssel einer Person oder einem Objekt, insbesondere einen ID-Token oder einem Terminal, zuordnet. Ferner kann der Eintrag die Authentizität und Integrität des entsprechenden öffentlichen kryptographischen Schlüssels bestätigen. Darüber hinaus kann der Eintrag weitere Eigenschaften des entsprechenden öffentlichen kryptographischen Schlüssels und/oder der Person bzw. des Objekts umfassen, welchem der öffentlichen kryptographischen Schlüssel zugeordnet ist. Das Zertifikat, also der bzw. die entsprechenden Einträge der Blockchain, können signiert oder unsigniert sein, d.h. das Zertifikat kann eine Signatur über alle zu dem Zertifikat gehörende Informationen oder keine Signatur umfassen. Das Zertifikat kann beispielsweise über mehrere Einträge der Blockchain verteilt gespeichert sein. Eine verteilte Speicherung kann den Vorteil haben, dass diese ein Aktualisieren der Informationen des Zertifikats, d.h. der Zertifikatsinformationen, ermöglicht. Beispielsweise kann ein Zertifikat durch einen Eintrag in einem zusätzlichen Block der Blockchain gesperrt werden, seine Gültigkeitsdauer kann verlängert werden, Berechtigungen können geändert werden, etc. Eine verteilte Speicherung entsteht beispielsweise durch ein Hinzufügen eines zusätzlichen Blocks zu der Blockchain mit aktualisierten Zertifikatsinformationen. Zertifikatsinformation können ferner Informationen über die Nutzung des entsprechenden Zertifikats, d.h. Zertifikatsinformationen umfassen. Die Zertifikatsinformationen können beispielsweise einen Nutzungszähler umfassen, welcher die Anzahl der Nutzungen des entsprechenden Zertifikats, beispielsweise für Terminal-Authentifizierungen oder ID-Token-Authentifizierungen, protokolliert. Im Falle einer verteilten Speicherung kann eine Signatur eines Zertifikats eine Mehrzahl von Einzelsignaturen umfassen, wobei jede Einzelsignatur die Informationen des Zertifikats umfassen, welche in dem Block der Blockchain gespeichert sind, in welchem auch die entsprechende Signatur gespeichert ist. Nach Ausführungsformen kann im Falle jedes zusätzlichen Blocks der Blockchain, welcher Informationen des entsprechenden Zertifikats umfasst, die in dem entsprechenden Block gespeicherte Signatur eine Signatur über alle zu dem entsprechenden Zertifikat gehörenden Informationen aller vorhergehenden Blöcke der Blockchain umfassen. Somit kann nach Ausführungsformen für jedes der in der Blockchain gespeicherten Zertifikate eine zertifikatsspezifische Unterblockchain innerhalb der Blockchain entstehen, falls die Signatur des zusätzlichen Blocks auch alle Signaturen aller zu dem entsprechenden Zertifikat gehörenden Informationen aller vorhergehenden Blöcke der Blockchain umfasst. Nach Ausführungsformen wird die Blockchain als Einheit gehandhabt, d.h. diese wird stets vollständig gespeichert.

Bei dem digitalen Zertifikat kann es sich auch um ein Public-Key-Zertifikat handeln, welches als eigenständige Einheit gehandhabt wird. Diese Einheit wird beispielsweise durch eine Signatur über alle zu dem Zertifikat gehörende Informationen definiert. Nach Ausführungsformen können zusätzliche Informationen zu dem Public-Key-Zertifikat, d.h. Zertifikatsinformationen, in einer Blockchain gespeichert sein. Dies kann es ermöglichen ein einmal ausgestelltes Public-Key-Zertifikat nicht nur zu sperren, sondern auch zu ändern. Beispielsweise könne die Zertifikatsinformationen ergänzende Informationen oder ersetzende Informationen umfassen. Ferner kann das Public-Key-Zertifikat selbst als ein Eintrag in einem Block einer Blockchain gespeichert sein. Durch Public-Key-Zertifikate kann eine sogenannte Public Key Infrastructure (PKI) realisiert werden. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zeroknowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, hier auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Ein entsprechendes Verschlüsseln eines Hashwerts wird mithin als Signieren des Hashwerts bezeichnet. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit virtueller Dokumente sicherstellen und nachweisen, dass diese von einer bestimmten juristischen Person stammen.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Unter einem Challenge-Response-Verfahren wird hier ein Authentifizierungsverfahren zur Authentifizierung eines zweiten Teilnehmers durch einen ersten Teilnehmer verstanden. Der erste Teilnehmer eine Aufgabe (engl. challenge), welche der zweite lösen und korrekt beantworten muss (engl. response), um zu beweisen, dass er sich im Besitz einer bestimmten Information, eines gemeinsamen Geheimnisses, befindet, ohne das Geheimnis selbst zu übertragen. Da das gemeinsame Geheimnis im Zuge des Verfahrens nicht übertragen wird, kann das Verfahren einen effektiven Schutz dagegen bieten, dass das Geheimnis in die Hände eines die Kommunikation zwischen den beiden Teilnehmern mithörenden Angreifer (Man-in-the-Middle-Angriff) fallen kann.

Beispielsweise sendet der erste Teilnehmer als Challenge eine Zufallszahl N, auch Nonce genannt, an den zweiten Teilnehmer. Der zweite Teilnehmer kombiniert die empfangene Zufallszahl mit dem gemeinsamen Geheimnis, wendet beispielsweise eine Hashfunktion oder eine Verschlüsselung auf die Kombination an und sendet das Ergebnis als Response an den ersten Teilnehmer. Der erste Teilnehmer, welcher sowohl die Zufallszahl als auch das gemeinsame Geheimnis und die verwendete Hashfunktion bzw. Verschlüsselung kennt, führt dieselbe Berechnung durch und vergleicht sein Ergebnis mit der Response, welche er vom zweiten Teilnehmer erhalten hat. Sind das Ergebnis und die empfangene Response identisch, so ist der zweite Teilnehmer erfolgreich gegenüber dem ersten Teilnehmer authentifiziert.

In der Kryptographie wird die Bezeichnung Nonce beispielsweise zum Identifizieren einer Zahlen- oder Buchstabenkombination verwendet, welche nur ein einziges Mal in dem jeweiligen Kontext verwendet wird. Ein Nonce wird hierzu beispielsweise unter Verwendung einer Zufallszahl erzeugt, die ausreichend groß ist, so dass die Wahrscheinlichkeit einer doppelten Benutzung vernachlässigbar ist. Nonces können den Vorteil haben, dass sie einen effektiven Schutz gegen Replay-Angriffe bieten.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptographische Bedingung, insbesondere eine erfolgreiche Authentifizierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann, beispielsweise nach einem RFID- und/oder NFC-Standard. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Terminal" wird hier ein elektronisches Gerät verstanden, welches ein Lesegerät umfasst, das einen Lesezugriff und/oder einen Schreibzugriff auf das Mobilfunkgerät ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem Mobilfunkgerät ausgestattet ist.

Das Terminal kann nach Ausführungsformen ein Lesegerät bzw. Lesemodul zum Kommunizieren mit dem ID-Token sowie ein Steuermodul zum Steuern der Kommunikation und des Datenaustauschs umfassen. Das Lesemodul kann beispielsweise eine Antenne zur kontaktlosen Kommunikation mit dem ID-Token umfassen. Beispielsweise kann es sich bei dem Lesemodul um ein RIFD-Lesemodul handeln. Dabei kann beispielsweise die Kommunikation zwischen dem Lesemodul und dem ID-Token entsprechend der Norm ISO 14443 drahtlos mit einer Frequenz von 13,56 MHz erfolgen. Die Kommunikation zwischen Terminal und Blockchain-Server kann über ein Netzwerk wie etwa ein Intranet oder das Internet erfolgen. Sobald der Terminal erstmalig die Freigabe des Zugriffs auf die Sicherungseinrichtung erteilt hat, kann das Terminal in der zweiten Blockchain zusätzliche ID-Token-Zertifikatsinformationen speichern, welches für einen bestimmten Zeitraum den weiteren Zugriff auf die Sicherungseinrichtung ohne weitergehende und zusätzliche aufwendige Authentifizierung ermöglichen.

Der Begriff "ID-Token" bezeichnet eine Vorrichtung, wie beispielsweise ein tragbares elektronisches Gerät, zum Beispiel einen sogenannten USB-Stick, oder ein Dokument, insbesondere ein Wert- oder Sicherheitsdokument.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln.

Unter einem "Attribut" wird im Folgenden ein Datenwert, zum Beispiel eine Zahl oder ein Text, verstanden. Bei dem Attribut kann es sich um eine Angabe bezüglich der Identität eines Nutzers handeln, dem der ID-Token zugeordnet ist, insbesondere bezüglich dessen sogenannter digitaler Identität. Beispielsweise können Name, Vorname, Adresse des Nutzers Attribute darstellen. Ein Attribut kann auch Daten beinhalten, die zur Prüfung einer Berechtigung des Nutzers dienen, wie etwa einer Zutritts- und/oder Zugangsberechtigung. Beispielsweise kann ein Attribut Daten beinhalten, die zur Prüfung einer Berechtigung des Nutzers zur Inanspruchnahme eines bestimmten Online-Dienstes dienen, wie zum Beispiel das Alter des Nutzers, wenn dieser einen Onlinedienst in Anspruch nehmen möchte, der einer bestimmten Altersgruppe vorbehalten ist. Ein Attribut kann auch einen Datenwert bezeichnen, welcher eine Zugangsberechtigung zu einer Sicherungseinrichtung umfasst, welche den Zugang zu beschränkten Ressourcen regelt. In diesem Zusammenhang kann das Attribut ebenfalls eine bestimmte Gruppenzugehörigkeit angeben, wobei der Zugang zu einer Sicherungseinrichtung besagter Gruppen vorbehalten ist.

Eine "Sicherungseinrichtung" wird im Rahmen der vorliegenden Beschreibung als eine Einrichtung verstanden, welche den Zugang zu beschränkten Ressourcen regelt. Bei den beschränken Ressourcen kann es sich beispielsweise um einen räumlich abgegrenzten Bereich, wie etwa ein Gebäude oder einen Gebäudeteil, handeln, um eine Vorrichtung, wie etwa ein Computersystem, ein Fahrzeug oder eine Fertigungsanlage. Ferner kann es sich bei den beschränken Ressourcen beispielsweise um elektronische Daten handeln.

Der Zugang zu den beschränkten Ressourcen wird von der Sicherungseinrichtung so geregelt, dass er nur nach Nachweis einer entsprechenden Berechtigung mittels des ID-Tokens gewährt wird. Als Sicherungseinrichtung wird somit im Folgenden jegliches softwarebasierte, firmwarebasierte und/oder hardwarebasierte System bezeichnet, welches einem Nutzer nur unter der Voraussetzung einer erfolgreichen Authentifizierung gegenüber diesem System Zugang zu beschränkten Ressourcen, wie etwa elektronischen Daten, Funktionalitäten, Vorrichtungen und/oder räumliche Bereiche, gewährt. Eine Sicherungseinrichtung kann beispielsweise eine Alarmanlage, eine Verriegelungsanlage, ein Gebäude, einen Raum, eine Vorrichtung, insbesondere eine Datenverarbeitungsvorrichtung, eine Komponente einer Vorrichtung, ein Softwareprogramm und/oder ein Softwaremodul umfassen. Falls ein Verfahren zur Freigabe eines Zugangs zu der Sicherungseinrichtung einen Nutzer eines DU-Tokens gegenüber dem Terminal als berechtigt ausweist, unterbindet die Sicherungseinrichtung für diesen Nutzer beispielsweise ein Auslösen eines Alarms einer Alarmanlage, entriegelt die Verriegelungsvorrichtung, gewährt Zugang zu dem Gebäude, dem Raum und/oder gewährt Zugriff auf das Gerät, auf die Komponente des Geräts, auf das Softwareprogramm und/oder das Softwaremodul.

Unter einem "statischen" kryptographischen Schlüssel wird hier ein kryptografischer Schlüssel bzw. Datenwert verstanden, welcher in einem nichtflüchtigen Speichermedium gespeichert ist und für mehr als nur einer Sitzung Verwendung finden kann. Im Gegensatz wird hier unter einem "ephemeren" kryptographischen Schlüssel temporäre bzw. sitzungsgebundener kryptographischer Schlüssel bzw. Datenwerte verstanden, welcher nur für eine Sitzung generiert und nicht permanent gespeichert wird, sodass sie in einer weiteren Sitzung nicht mehr verwendet werden kann. Ephemere Datenobjekte werden im Folgenden beispielsweise mit einer Tilde "~" gekennzeichnet.

Unter einer "Blockchain" wird hier eine geordnete Datenstruktur verstanden, wobei jeder Block der Blockchain durch einen Prüfwert, z.B. einen Hash-Wert, identifiziert wird und einen Vorgängerblock in der Blockchain referenziert, für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die Blockchain besteht aus einer Reihe von Datenblöcken, in denen jeweils eine oder mehrere Transaktionen zusammengefasst und mit einem Prüfwert in Form eines Hashwerts versehen sind. Neue Blöcke der Blockchain werden in einem üblicherweise rechenintensiven Prozess erzeugt, der auch als sogenanntes Mining bezeichnet wird. Diese neu erzeugten Blöcke werden anschließend der Blockchain hinzugefügt und über ein Netzwerk an alle Teilnehmer, bzw. Knoten des Netzwerks, verbreitet.

Hierbei ist der Begriff "Blockchain" zu unterscheiden von dem aus der Kryptographie bekannten "Cipher Block Chaining" (CBC) Modus, bei welchem es sich um eine Betriebsart der sog. Blockverschlüsselung mit Blockchiffren handelt. Eine Blockverschlüsselung ist ein deterministisches Verschlüsselungsverfahren, bei dem ein Klartextblock, d. h. ein Klartextabschnitt fester Länge, auf einen Geheim- oder Schlüsseltextblock fester Länge unter Verwendung eines kryptographischen Schlüssels abgebildet wird. Zur Verschlüsselung von Nachrichten, welche länger sind als die Blocklänge, muss neben der Blockverschlüsselung ein Betriebsmodus festgelegt werden. Üblicherweise wird dazu die Nachricht in mehrere Blöcke aufgeteilt und durch Padding auf eine passende Länge gebracht. Eine solche Betriebsart der Blockverschlüsselung ist der CBC-Modus. Im CBC-Modus wird ein zu verschlüsselnder Klartextblock vor dem Verschlüsseln, d.h. dem Erzeugen eines Geheimblocks, zunächst mit einem in einem vorhergehenden Schritt aus einem vorhergehenden Klartextblock erzeugten Geheimtextblock per XOR verknüpft.

Bei einer Blockchain im Sinne der vorliegenden Erfindung wird demgegenüber jeder Block der Blockchain jeweils durch einen Prüfwert identifiziert und referenziert einen Vorgängerblock in der Blockchain. Insbesondere kann der selbst Prüfwert zum Referenzieren verwendet werden, indem dieser in einem nachfolgenden Block der Blockchain gespeichert wird. Der Prüfwert, beispielsweise ein Hashwert, erlaubt es den Inhalt des von diesem identifizierten und/oder referenzierten Blocks auf seine Integrität zu prüfen. Im Falle des CBC Modus werden weder Prüfwerte für die einzelnen Geheimtextblöcke bereitgestellt, noch referenzieren die Geheimtextblöcke aufeinander. Aufgrund der XOR-Verknüpfung lässt sich aus einem gegebenen Geheimtextblock nicht der vorhergehende Geheimtextblock ablesen, weshalb anhand des gegebenen Geheimtextblock an sich auch nicht die Integrität des vorhergehenden Geheimtextblocks geprüft werden. Der entsprechende gegebene Geheimtextblock an sich stellt mithin keinen Prüfwert zum Prüfen des vorhergehenden Geheimtextblocks zur Verfügung. Demgegenüber umfassend die Blöcke einer Blockchain nach Ausführungsformen jeweils einen aus den entsprechenden Blöcken an sich, d.h. ohne Zusatzinformationen, ablesbaren Prüfwert zum Prüfen der Integrität des vorangehenden Blocks. Ferner umfassen die Blöcke einer Blockchain nach Ausführungsformen jeweils Nutzdaten, bei welchen es sich um in der Blockchain zu speichernde Daten handelt, in Klartextform.

Im Falle einer Blockchain können die Blöcke ferner unterschiedliche Größen aufweisen. Dies erlaubt es beispielsweise unterschiedliche Informationen mit unterschiedlichen Größen in unterschiedliche Blöcke einzubringen, ohne diese Informationen aufteilen zu müssen. Ferner weist ein Prüfwert nach Ausführungsformen eine kleiner Datengröße auf, als die Daten, deren Integrität er absichert. Insbesondere kann es sich bei dem Prüfwert um einen Wert handeln, aus welchem die Daten, deren Integrität er absichert, nicht rekonstruierbar sind, d.h. um das Ergebnis einer Einwegfunktion, wie etwa einer Hashfunktion.

Ausführungsformen können den Vorteil haben, dass die Blockchain durch die Speicherung kryptografischer Prüfwerte, d.h. Hashwerten, des vorhergehenden Blocks im jeweils nachfolgenden Block ein hohes Maß an Sicherheit gegenüber nachträglichen Manipulationen bietet. Bei einer Blockchain werden die Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme im Header des Blocks vermerkt. Das Verketten der Blöcke kann dann unter Verwendung dieser Root-Hashwerte. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner von diesen umfasst und über den Root-Hashwert gesicherten Transaktionen praktisch ausgeschlossen ist, da hierfür die Hashwerte aller nachfolgenden Blöcke in kurzer Zeit ebenfalls neu berechnet werden müssten.

Zudem kann durch eine Anpassung der notwendigen Rechenintensität für die Erstellung jeweils neuer Blöcke die Sicherheit zusätzlich erhöht werden. Die für die Erstellung neuer Blöcke notwenige Rechenintensität lässt sich über Anforderungen an den Hashwert des zu erstellenden neuen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen neuen Blocks notwendig ist. Der Hashwert eines Blocks lässt sich beispielsweise durch Hinzufügen und Variieren eines Nonce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer hinreichend rechenintensiven Generierung neuer Blöcke aus.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und $2^{256}-1$. Die Wahrscheinlichkeit, dass beim Anwenden des Hashalgorithmus einen bestimmten Hash herauskommt, ist somit (maximaler Hash-Wert+1)$^{-1}$, im Falle des SHA 256-Algorithmus also $2^{-256}$. Die Wahrscheinlichkeit, dass der resultierende Hash-Wert kleiner gleich einem Grenzwert bzw. Zielwert (engl. target) ist, beträgt daher (target)/(max. Hash-Wert). Für einen beispielhaften maximalen Grenzwert von $(2^{16}-1) \cdot 2^{208}$ beträgt die Wahrscheinlichkeit $[(2^{16}-1) \cdot 2^{208}]/2^{256} \approx 2^{-32}$. Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: $2^{-32}$/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: $S_y = (x/y) \cdot S$. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Blockchain-Servern, konstant zu halten. Wird die Schwierigkeit so angepasst, dass alle y·Sek. ein Treffer erzielt wird, kann die Hashrate R des Computersystems wie folgt parametrisiert werden: R = $(2^{32} \cdot S)/(y \cdot Sek.)$.

Werden gültige Blöcke durch ein rechenintensive Verfahren, wie das zuvor Beschriebene erzeugt, so vertrauen die Teilnehmer des Blockchain-Netzwerks der längsten gültigen Blockchain, da hinter dieser die meiste Rechenleistung steht und somit angenommen werden kann, dass diese von der Mehrheit der Teilnehmer als gültig anerkannt wird.

Kommt es beispielsweise dazu, dass ein Fork, d.h. eine Verzweigung, in der Blockchain entsteht, setzt sich irgendwann der Fork mit der größeren Kettenlänge durch, da anzunehmen ist, dass hinter diesem die Mehrheit der Teilnehmer steht.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählten Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann neue Einträge vorschlagen, die in einen neuen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen neuen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc, 2014, https://ripple.com/files/ripple_consensus_whitepaper.pdf).

Beispielsweise kann es sich bei der Blockchain um eine private oder öffentliche Blockchain handeln. Beispielsweise handelt es sich um eine Bitcoin-, Litecoin- oder Ethereum-Blockchain.

Ferner können Ausführungsformen den Vorteil haben, dass die Blockchain darauf ausgelegt ist als dezentralen Datenbank in einem dezentralen Netzwerk implementiert zu werden, wobei sie redundant und dezentral auf allen Knoten des entsprechenden Netzwerks gespeichert wird. Wird die Verbindung eines Knotens zum Rest des Netzwerks unterbrochen, so steht diesem nach wie vor die vollständige Blockchain zur Verfügung. Selbst wenn die Unterbrechung längere Zeit andauern sollte, so steht dem Knoten dennoch die vollständige Blockchain bis zu der Unterbrechung zur Verfügung und allenfalls neuste Einträge, welche nach diesem Zeitpunkt erfolgt sind fehlen. Somit kann die Blockchain auch im Offline-Betrieb einen effizienten Zugriff auf die in ihr enthaltenen Daten sicherstellen. Durch ein regelmäßiges Synchronisieren der verteilt gespeicherten redundanten Versionen der Blockchain kann zudem sichergestellt werden, dass die entsprechenden Versionen Blockchain im Offlinebetrieb zwischen den Updates auf einem ausreichend aktuellen Stand sind.

Ein "Programmmodul" bezeichnet hier ein eigenständiges Programm, welches in einer Blockchain gespeichert ist. Das Programmmodul kann dazu konfiguriert sein das Erstellen von dem Programmmodul zugeordneten Einträgen in der Blockchain zu steuern. Das Programmmodul kann in einem Block der Blockchain oder über mehrere Blöcke der Blockchain verteilt gespeichert sein. Bei einem Programmmodul kann es sich beispielsweise um einen "smart contract" handeln, wie er beispielsweise in der Open Source Ethereum Blockchain implementierbar ist.

Im Weiteren werden Ausführungsformen der Erfindung mit Bezugnahme auf die Zeichnungen näher erläutert. Es zeigen:

Figur 1    ein schematisches Blockdiagramm eines beispielhaften Systems,
Figur 2    ein schematisches Blockdiagramm eines beispielhaften Sicherungssystems,
Figur 3    ein UML-Diagramm einer Ausführungsform eines beispielshaften Verfahrens,
Figur 4    ein UML-Diagramm einer Ausführungsform eines beispielshaften Verfahrens,
Figur 5    ein schematisches Flussdiagramm eines beispielshaften Verfahrens,
Figur 6    ein schematisches Flussdiagramm eines beispielshaften Verfahrens und
Figur 7    ein schematisches Flussdiagramm eines beispielshaften Verfahrens.

Elemente der nachfolgenden Ausführungsformen, die einander entsprechen, werden mit denselben Bezugszeichen gekennzeichnet.

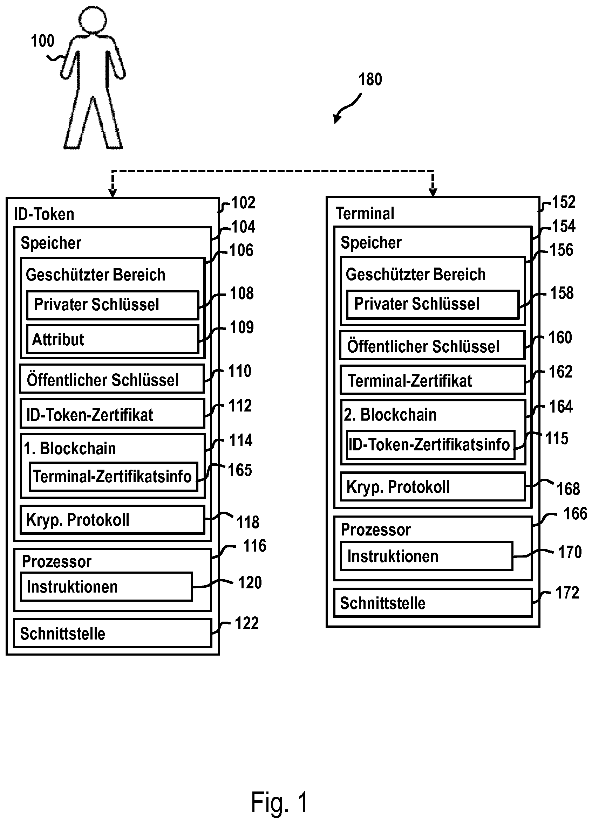

Figur 1 zeigt schematisches Blockdiagramm eines beispielhaften Systems 180, welches einen ID-Token 102 eines Nutzers 100 und ein Terminal 152 umfasst. Der ID-Token 102 umfasst einen Prozessor 116, welcher dazu konfiguriert ist, Programminstruktionen 120 auszuführen. Durch Ausführung der Programminstruktionen 120 steuert der Prozessor 116 den ID-Token 102 so, dass er eine der Ausführungsformen des Verfahrens zur Kontrolle eines Zugriffs des Terminals 152 auf ein in dem ID-Token 102 gespeichertes Attribut 109 ausführt. Das Ausführen der Programminstruktionen 120 umfasst beispielsweise ein Ausführen eines kryptographischen Protokolls 118, welche etwa zum Zwecke eines Verschlüsselns, Entschlüsselns, Signierens und/oder Signaturprüfens von Daten im Zuge des Verfahrens zur Zugriffskontrolle, in einem Speicher 104 des ID-Tokens 102 gespeichert sind. Nach Ausführungsformen werden die Programminstruktionen 120 zumindest teilweise und/oder vollständig umfasst von einer ersten Blockchain 114 umfasst und zum Ausführen durch den Prozessor 116 bereitgestellt.

In dem Speicher 104 des ID-Tokens 102 sind ferner ein statischer öffentlicher kryptographischer ID-Token-Schlüssel 110, ein ID-Token-Zertifikat 112 sowie die erste Blockchain 114 gespeichert. In einem oder mehreren Einträgen der ersten Blockchain 114 sind Terminal-Zertifikatsinformationen 165 zu einem dem Terminal 152 zugeordneten Terminal-Zertifikat 162 gespeichert. Der statische öffentliche kryptographische ID-Token-Schlüssel 110 kann beispielsweise von dem ID-Token-Zertifikat 112 umfasst sein. Ferner bildet der statische öffentliche kryptographische ID-Token-Schlüssel 110 mit einem dem ID-Token zugeordneten privaten kryptographischen ID-Token-Schlüssel 108 ein asymmetrisches kryptographisches ID-Token-Schlüsselpaar. Der private kryptographische ID-Token-Schlüssel 108 ist in einem geschützten Speicherbereich 106 des Speichers 104 gespeichert. Auf den geschützten Speicherbereich 106 des Speichers 104 ist ein Zugriff, das heißt ein Lesezugriff oder ein Schreibzugriff, nur über den Prozessor 116 des ID-Tokens 102 möglich. Der Zugriff von dem mit dem Speicher 104 gekoppelten Prozessor 116 ist nur dann möglich, wenn eine hierzu erforderliche Bedingung erfüllt ist, beispielsweise eine erfolgreiche Authentifizierung der den Zugriff anfragenden Instanz durch den ID-Token 102. In dem geschützten Speicherbereich 106 sind neben dem privaten kryptographischen ID-Token-Schlüssel 108 ein oder mehrere Attribute 109 gespeichert.

Schließlich umfasst der ID-Token 102 eine Kommunikationsschnittstelle 122, welche zum Kommunizieren mit einer Kommunikationsschnittstelle 172 des Terminals 152 konfiguriert sind. Hierbei kann es sich insbesondere um eine Nahfeldkommunikation, beispielsweise mittels RFID, Bluetooth oder WLAN handeln. Beispielsweise erfolgt die Kommunikation zwischen dem Terminal 152 und dem ID-Token 102 entsprechend der Norm ISO 14443 drahtlos mit einer Frequenz von 13,56 MHz. Nach weiteren Ausführungsformen kann die Kommunikation zwischen dem Terminal 152 und dem ID-Token 102 auch kontaktbehaftet erfolgen. In diesem Fall umfasst das Terminal 152 beispielsweise einen mechanischen Einzug zum Aufnehmen des ID-Tokens 102 in einem Gehäuse des Terminals 152 und/oder einen Steckanschluss, wie etwa einen USB-Anschluss, zum Herstellen einer lösbaren mechanischen Steckverbindung zwischen dem Terminal 152 und dem ID-Token 102.

Das Terminal 152 umfasst einen Prozessor 166, welcher dazu konfiguriert ist, Programminstruktionen 170 auszuführen. Durch Ausführung der Programminstruktionen 170 steuert der Prozessor 166 das Terminal 152 so, dass es eine der Ausführungsformen des Verfahrens zur Kontrolle des Zugriffs des Terminals 152 auf das in dem ID-Token 102 gespeichertes Attribut 109 ausführt. Das Ausführen der Programminstruktionen 170 umfasst beispielsweise ein Ausführen eines kryptographischen Protokolls 168, welche etwa zum Zwecke eines Verschlüsselns, Entschlüsselns, Signierens und/oder Signaturprüfens von Daten im Zuge des Verfahrens zur Zugriffskontrolle, in einem Speicher 154 des Terminals 152 gespeichert sind. Nach Ausführungsformen werden die Programminstruktionen 170 zumindest teilweise und/oder vollständig umfasst von einer zweiten Blockchain 164 umfasst und zum Ausführen durch den Prozessor 166 bereitgestellt.

In dem Speicher 154 des Terminals 152 sind ferner ein statischer öffentlicher kryptographischer Terminal-Schlüssel 160, ein Terminal-Zertifikat 162 sowie die zweite Blockchain 164 gespeichert. In einem oder mehreren Einträgen der zweiten Blockchain 164 sind ID-Token-Zertifikatsinformationen 115 zu dem dem ID-Token 152 zugeordneten ID-Token-Zertifikat 112 gespeichert. Der statische öffentliche kryptographische Terminal-Schlüssel 170 kann beispielsweise von dem Terminal-Zertifikat 162 umfasst sein. Ferner bildet der statische öffentliche kryptographische Terminal-Schlüssel 170 mit einem dem Terminal zugeordneten privaten kryptographischen Terminal-Schlüssel 158 ein asymmetrisches kryptographisches Terminal-Schlüsselpaar. Der private kryptographische Terminal-Schlüssel 158 ist in einem geschützten Speicherbereich 156 des Speichers 154 gespeichert. Auf den geschützten Speicherbereich 156 des Speichers 154 ist ein Zugriff, das heißt ein Lesezugriff oder ein Schreibzugriff, nur über den Prozessor 166 des ID-Tokens 152 möglich. Der Zugriff von dem mit dem Speicher 154 gekoppelten Prozessor 166 ist nur dann möglich, wenn eine hierzu erforderliche Bedingung erfüllt ist, beispielsweise eine erfolgreiche Authentifizierung durch das Terminal 152. In dem geschützten Speicherbereich 156 ist der private kryptographische Terminal-Schlüssel 158 gespeichert.

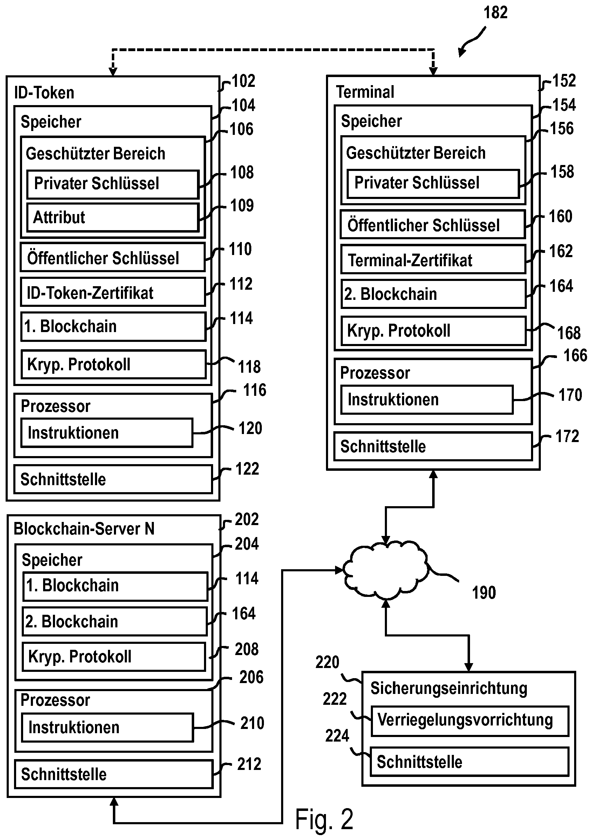

Figur 2 zeigt ein schematisches Blockdiagramm eines beispielhaften Sicherungssystems 182, welches ein System 180 mit einem ID-Token 102 und ein Terminal 152 gemäß Figur 1 umfasst. Ferner umfasst das Sicherungssystem 182 eine Sicherungseinrichtung 220, welche den Zugang zu beschränkten Ressourcen regelt. Bei den beschränkten Ressourcen kann es sich beispielsweise um beschränkte räumliche Ressourcen handeln. Zum Beschränken des Zugangs umfasst die Sicherungseinrichtung 220 beispielsweise eine Tür, Drehtür, eine Schranke, ein Tor und/oder eine Durchgangsschleuse mit einem Ein- und einem Ausgang. Ferner kann es sich bei den beschränkten Ressourcen beispielsweise um ein Datenverarbeitungssystem, wie etwa ein Computersystem, ein Netzwerk und/oder eine Datenbank, mit beschränken Zugangsrechten handeln. Ferner kann es sich bei den Ressourcen auch um digitale Dateien und/oder Verzeichnisse mit beschränkten Zugangsrechten, insbesondere beschränkten Lese-, Schreib- und/oder Ausführrechten, handeln.

Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Daten wie etwa digital codierte Dokumente werden in diesem Fall beispielsweise als Teil der Datenbasis gespeichert.

Der Speicher kann beispielsweise einen Wechselspeicher umfassen handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Die Sicherungseinrichtung 220 kommuniziert mit dem Terminal 152 über das Netzwerk 190 unter Verwendung der Kommunikationsschnittstelle 224 der Sicherungseinrichtung 220. Ferner ist die Kommunikationsschnittstelle 172 zusätzlich zur Kommunikation mit der Sicherungseinrichtung 220 konfiguriert oder es ist in dem Terminal eine zusätzliche Kommunikationsschnittstelle zur Kommunikation mit der Sicherungseinrichtung 220 vorgesehen. Nach Ausführungsformen kann die Sicherungseinrichtung 220 das Terminal 152 umfassen, beispielsweise in Form eines in die Sicherungseinrichtung 220 integriertes Kartenlesegerät, falls der ID-Token 102 in Form einer Chipkarte vorliegt. In Diesem Fall erfolgt die Kommunikation zwischen Sicherungseinrichtung 220 und Terminal 152 intern über elektronische Datenleitungen.

Das Terminal 152 und der ID-Token 102 führen das Verfahren zur Kontrolle des Zugriffs des Terminals 152 auf das in dem geschützten Speicherbereich 106 des ID-Token 102 gespeicherten Attributs 109 aus. Falls sowohl die Terminal-Authentifizierung als auch die ID-Token-Authentifizierung erfolgreich verlaufen, wird dem Terminals 152 ein Zugriff auf das Attribut 109 gewährt. Das ausgelesene Attribut 109 wird durch das Terminal 152 verifiziert. Beispielsweise wird geprüft, ob es ein oder mehrere vordefinierte Anforderungen erfüllt. Alternative oder zusätzlich wird das ausgelesene Attribut 109 gespeichert. Beispielsweise wird das ausgelesene Attribut 109 mit einem hinterlegten Referenzwert, einer Liste von Referenzwerten und/oder einem Referenzwertebereich verglichen. Erfüllt das Attribut 109 die vordefinierten Anforderungen sendet das Terminal ein Bestätigungs- bzw. Freigabesignal zur Freigabe des Zugangs zu der Sicherungseinrichtung 220 und damit zu den beschränkten Ressourcen.

Die Sicherungseinrichtung 220 umfasst beispielsweise eine Verriegelungsvorrichtung 222, wie etwa ein Schloss und/oder einen Sperrriegel. Auf die Freigabe des Zugangs hin sendet die Sicherungseinrichtung 220 ein Entriegelungssignal an die entriegelt Verriegelungsvorrichtung 222, welche auf den Empfang des Entriegelungssignals bzw. durch das Entriegelungssignal entriegelt wird.

Nach Ausführungsformen können der ID-Token 102 und das Terminal 152 jeweils als Blockchain-Server konfiguriert sein, d.h. der ID-Token 102 und das Terminal 152 sind dazu konfiguriert zusätzliche Einträge zu der ersten Blockchain 114 bzw. der zweiten 164 hinzuzufügen. Beispielsweise sind die Programminstruktionen 120, 170 sowie die von diesen verwendeten kryptographischen Protokolle 118, 168 dazu konfiguriert neue Einträge der Blockchains 114, 164 zu erzeugen. Nach weiteren Ausführungsformen sind ein oder mehrere eigenständige und/oder zusätzliche Blockchain-Server 202 vorgesehen, welche über das Netzwerk 190 mit dem Terminal 152 kommunikative verbunden sind. Sollen zusätzliche Daten, etwa zusätzliche ID-Token- oder Terminal-Zertifikatsinformationen zu den Blockchains 114, 164 hinzugefügt werden, so werden diese Daten von dem ID-Token 102 über das Terminal 152 und das Netzwerk 190 bzw. von dem Terminal 152 über das Netzwerk 190 an die Blockchain-Server 202 gesendet.

Der Blockchain-Server 202 umfasst eine Kommunikationsschnittstelle zur Kommunikation mit dem Terminal 152 über das Netzwerk 190. Nach Ausführungsformen handelt es sich bei dem Netzwerk 190 um ein Funknetzwerk oder das Netzwerk 190 umfasst ein Funknetzwerk. Beispielsweise handelt es sich bei dem Funknetzwerk um ein digitales zellulares Funknetzwerk, wie etwa ein digitales zellulares Mobilfunknetz bzw. Mobilfunknetzwerk, welches nach einem Mobilfunkstandard wie zum Beispiel GSM, UMTS, LTE, CDMA oder einem anderen Standard aufgebaut sein kann. Bei dem Funknetzwerk kann es sich auch um eine WLAN-Netzwerk handeln, beispielsweise nach dem Standard der IEEE-802.11-Familie. Nach Ausführungsformen kann der ID-Token als mobiles, tragbares Telekommunikationsgerät, etwa als ein Mobilfunkgerät beispielsweise in Form eines Smartphones ausgestaltet sein. Der ID-Token kann nach Ausführungsformen beispielsweise auch selbst über das als Funknetzwerk konfigurierte Netzwerk 190 kommunizieren. Beispielsweise kann es mit dem Terminal 182 und/oder mit dem Blockchain-Server 202 über das Netzwerk 190 kommunizieren.

Der Blockchain-Server 202 umfasst einen Prozessor 206, welcher dazu konfiguriert ist, Programminstruktionen 210 auszuführen. Ferner umfasst der Blockchain-Server 202 einen Speicher 204 mit der ersten und zweiten Blockchain 114, 164. Durch Ausführung der Programminstruktionen 210 steuert der Prozessor 206 den Blockchain-Server 202 so, dass er unter Verwendung von dem ID-Token 102 und/oder von dem Terminal 152 bereitgestellten zusätzlichen ID-Token- bzw. Terminal-Zertifikatsinformationen zusätzliche Blöcke für die Blockchains 114, 164 erzeugt und diesen hinzufügt. Zum Erweitern der ersten und zweiten Blockchain 114, 164 greift der Blockchain-Server 202 auf ein kryptographisches Protokoll 208 zurück, welches in dem Speicher 204 des Blockchain-Server 202 gespeichert ist. Wenn die erste und/oder zweite Blockchain 114, 164 erweitert wurden, werden die in dem Speicher 104 des ID-Tokens 102 bzw. in dem Speicher 154 des Terminals 152 gespeicherte erste und/oder zweite Blockchain 114, 164 durch den Blockchain-Server 202 mit der erweiterten erste und/oder zweite Blockchain über die Kommunikationsschnittstelle 212 und das Netzwerk 190 synchronisiert.

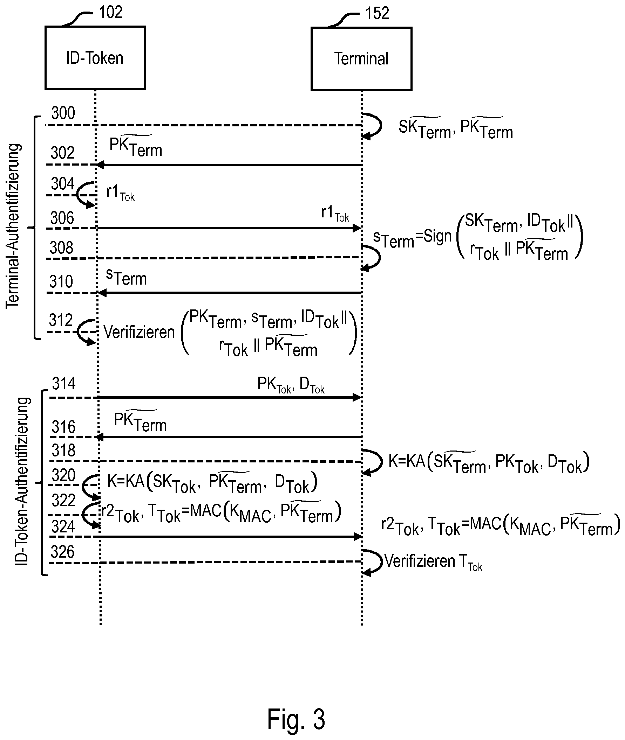

Figur 3 zeigt ein UML-Diagramm eines ersten beispielhaften Verfahrens. Die Kommunikation erfolgt zwischen dem ID-Token 102 und dem Terminal 152 zum Durchführen des Verfahrens zur Kontrolle des Zugriffs des Terminals 162 auf das in dem ID-Token 102 gespeicherte Attribut 109. Hierzu werden eine Terminal-Authentifizierung und eine ID-Token-Authentifizierung ausgeführt.

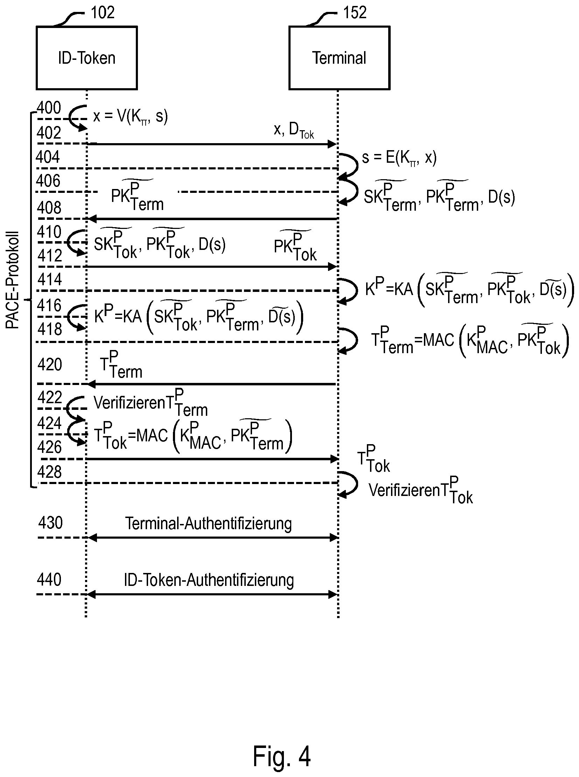

Nach Ausführungsformen wird zunächst die Terminal-Authentifizierung ausgeführt. In Schritt 300 erzeugt das Terminal 152 eine ephemeres asymmetrisches Terminal-Schlüsselpaar, welches einen ephemeren privaten kryptographischen Terminal-Schlüssel $\widetilde{SK_{Term}}$ umfasst sowie einen ephemeren öffentlichen kryptographischen Terminal-Schlüssel $\widetilde{PK_{Term}}$. Das ephemere asymmetrische Terminal-Schlüsselpaar wird temporär in dem Speicher 154 des Terminals 152 gespeichert. Beispielsweise wird das ephemere asymmetrische Terminal-Schlüsselpaar in einem nichtflüchtigen Speicher gespeichert. Nach Ausführungsformen wird der ephemere private kryptographische Terminal-Schlüssel $\widetilde{SK_{Term}}$ in dem geschützten Speicherbereich 156 temporär gespeichert. In Schritt 302 wird der ephemeren öffentlichen kryptographischen Terminal-Schlüssel $\widetilde{PK_{Term}}$ von dem Terminal 152 an den ID-Token 102 gesendet, beispielsweise in komprimierter Form. In Schritt 304 erzeugt der ID-Token 102 ein zufälliges erstes Geheimnis $r1_{Tok}$, beispielsweise eine Zufallszahl, und sendet diese in Schritt 306 an das Terminal 152. In Schritt 308 erzeugt das Terminal eine Signatur $s_{Term}$ der empfangenen Zufallszahl unter Verwendung des statischen privaten kryptographischen Terminal-Schlüssels 158 $SK_{Term}$ aus dem geschützten Speicherbereich 156. Nach Ausführungsformen wird ferner ein Identifikator $ID_{Tok}$ des ID-Tokens 102 zur Erzeugung der Signatur $s_{Term}$ verwendet. Der entsprechende Identifikator $ID_{Tok}$ wurde beispielsweise inertial von dem ID-Tokens 102 an das Terminal 152 übertragen. Bei dem Identifikator $ID_{Tok}$ handelt es sich beispielsweise um einen statischen Identifikator oder um einen ephemeren Identifikator. Letzter wird beispielsweise in Zuge eines inertialen PACE-Verfahrens generiert, z.B. Identifikator $ID_{Tok} = \widetilde{PK_{Term}^{P}}$ (vgl. Figur 4). Ferner wird zur Erzeugung der Signatur $s_{Term}$ der in Schritt 300 erzeugte ephemere öffentliche kryptographische Terminal-Schlüssel $\widetilde{PK_{Term}}$ verwendet. Nach Ausführungsformen können noch weitere Hilfsdaten zur Erzeugung der Signatur $s_{Term}$ herangezogen werden.

In Schritt 310 wird die Signatur $s_{Term}$ als Nachricht an den ID-Token 102 gesendet. In Schritt 312 verifiziert der ID-Token 102 die Signatur unter Verwendung des statischen öffentlichen kryptographischen Terminal-Schlüssels 160 $PK_{Term}$ sowie des zufälligen ersten Geheimnisses $r1_{Tok}$. Beispielsweise hat die Signatur die Form

$$s_{Term}=Sign\left(SK_{Term},\ ID_{Tok}\ \|\ r_{Tok}\ \|\ \widetilde{PK_{Term}}\right).$$ Nach Ausführungsformen werden zum Verifizieren der Signatur $s_{Term}$ ferner Identifikator $ID_{Tok}$, der in Schritt 302 empfangene ephemere öffentliche kryptographische Terminal-Schlüssel $\widetilde{PK_{Term}}$ und/oder weitere Hilfsdaten verwendet.

Auf eine erfolgreiche Terminal-Authentifizierung, d.h. auf eine positive Verifizierung der Signatur $s_{Term}$ hin wird eine ID-Token-Authentifizierung ausgeführt. In Schritt 314 wird der statische öffentliche kryptographische ID-Token-Schlüssel $\widetilde{PK_{Tok}}$ an das Terminal 152 übertragen werden. Ferner kann nach Ausführungsformen ein Domänenparameter des ID-Tokens 102 übertragen, welcher den ID-Tokens 102 einer bestimmten Domäne, z.B. einem bestimmten Verwendungsbereich bzw. Verwendungskontext zuordnet. In Schritt 316 wird nochmals der ephemere öffentliche kryp-

tographische Terminal-Schlüssel $\widetilde{PK_{Term}}$ übertragen. Nach alternativen Ausführungsformen kann dieser Schritt auch entfallen, um das Verfahren effizienter zu gestalten. Nach weiteren Ausführungsformen kann für die ID-Token-Authentifizierung ein zweites ephemeres asymmetrisches Terminal-Schlüsselpaar erzeugt werden und anstelle des ephemeren asymmetrischen Terminal-Schlüsselpaars der Terminal-Authentifizierung hier und im Folgenden für die ID-Token-Authentifizierung verwendet werden. In den Schritten 318 und 320 berechnen das Terminal 152 und der ID-Token 102 jeweils eigenständig ein gemeinsames, geteiltes Geheimnis K. Die beiden Ergebnisse von Terminal 152 und der ID-Token 102 für das gemeinsame, geteilte Geheimnis K sind identisch. Hierbei verwendet das Terminal den ephemeren privaten kryptographischen Terminal-Schlüssel $\widetilde{SK_{Term}}$ und den in Schritt 314 empfangenen statischen öffentlichen kryptographischen ID-Token-Schlüssel $\widetilde{PK_{Tok}}$, während der ID-Token 102 den ephemeren öffentlichen kryptographischen Terminal-Schlüssel $\widetilde{SK_{Term}}$ und den statischen privaten kryptographischen ID-Token-Schlüssel $\widetilde{SK_{Tok}}$ verwendet. Beispielsweise berechnet das Terminal 152 $K = KA\left(\widetilde{SK_{Term}}, PK_{Tok}, D_{Tok}\right)$, während der ID-Token 102

$$K = KA\left(SK_{Tok}, \widetilde{PK_{Term}}, D_{Tok}\right) \text{ berechnet.}$$

In Schritt 322 erzeugt der ID-Token 102 ein zufälliges zweites Geheimnis $r2_{Tok}$, beispielsweise eine Zufallszahl, sowie eine Signatur $T_{Tok}$ und sendet diese in Form einer Nachricht in Schritt 324 an das Terminal 152. Beispielsweise handelt es sich bei der Signatur $T_{Tok}$ um einen signierten Authentifizierungstoken $T_{Tok}$. Dieser umfasst beispielsweise den mit einem gemeinsamen Signaturschlüssel $K_{MAC}$ signierten ephemeren öffentlichen kryptographischen Terminal-Schlüssel $\widetilde{PK_{Term}}$. Der gemeinsame Signaturschlüssel $K_{MAC}$ wird Terminal 152 und ID-Token unabhängig erzeugt, beispielsweise unter Verwendung des gemeinsamen, geteilten Geheimnisses K und des zufälligen zweiten Geheimnisses $r2_{Tok}$, d.h. z.B. $K_{MAC} = KDF_{MAC}$ (K, $r2_{Tok}$). Hierbei bezeichnet KDF eine Schlüsselerzeugungsfunktion, welche beispielsweise die kryptographischen Protokolle 118, 168 umfassen können. $KDF_{MAC}$ bezeichnet beispielsweise eine Schlüsselerzeugungsfunktion zum Erzeugen eines Signaturschlüssels zum Authentifizieren mittels MAC im Zuge eines Secure-Messaging-Verfahrens. Das Authentifizierungstoken $T_{Tok}$ hat beispielsweise die Form

$$T_{Tok} = MAC\left(K_{MAC}, \widetilde{PK_{Term}}\right).$$ In Schritt 326 verifiziert das Terminal 152 den empfangenen Authentifizierungstoken $T_{Tok}$ unter Verwendung des empfangenen zufälliges zweites Geheimnis $r2_{Tok}$ sowie des daraus berechneten gemeinsamen Signaturschlüssels $K_{MAC}$. Ferner berechnen der ID-Token 102 und das Terminal 152 nach Ausführungsformen jeweils einen symmetrischen kryptographischen Schlüssel zum Verschlüsseln der weiteren Kommunikation zwischen ID-Token 102 und Terminal 152, etwa im Zuge des Auslesens des Attributs 109. Beispielsweise hat der symmetrischen kryptographischen Schlüssel die Form $K_V = KDF_V$ (K, $r2_{Tok}$), wobei $KDF_V$ beispielsweise eine Schlüsselerzeugungsfunktion zum Erzeugen eines symmetrischen Schlüssels zum Verschlüsseln mittels MAC im Zuge eines Secure-Messaging-Verfahrens bezeichnet.

Nach erfolgreicher Terminal-Authentifizierung und ID-Token-Authentifizierung wird das Attribut 109 von dem Terminal 152 aus dem geschützten Speicherbereich 106 des ID-Tokens 102 ausgelesen. Das Auslesen erfolgt beispielsweise über einen kryptographisch gesicherten Kommunikationskanal zwischen ID-Token 102 und Terminal 152. Beispielsweise ist der Kommunikationskanal Ende-zu-Endeverschlüsselt. Beispielsweise werden zur kryptographischen Sicherung ein symmetrischer Authentifizierungsschlüssel bzw. Signaturschlüssel zum Signieren der übertragenen Daten und ein symmetrischer Schlüssel zum Verschlüsseln der übertragenen Daten verwendet. Beispielsweise werden $K_{MAC}$ und $K_V$ aus der ID-Token-Authentifizierung verwendet.

Figur 4 zeigt ein UML-Diagramm eines zweiten beispielhaften Verfahrens. In dem Verfahren gemäß Figur 4 wird inertial ein PACE-Verfahren ausgeführt. Das PACE-Verfahren kann dazu verwendet werden, einen ephemeren Identifikator $ID_{Tok}$ des zwischen ID-Token 102 und Terminal 152 zu erzeugen und bereitzustellen. Ferner kann PACE-Verfahren dazu verwendetet werden, um einen ephemeren symmetrischen Signaturschlüssel zum Signieren der übertragenen Daten und einen ephemeren symmetrischen Schlüssel zum Verschlüsseln der übertragenen Daten für ein Secure-Messaging-Verfahren bereitzustellen.

In Schritt 400 erzeugt der ID-Token eine Zufallszahl s und verschlüsselt diese zu x = V($K_\pi$, s), wobei es sich bei $K_\pi$ um einen gemeinsamen, geteilten symmetrischen kryptographischen Schlüssel von ID-Tokens 102 und Terminal 152 handelt. Beispielsweise umfassen beide ein gemeinsames, geteiltes Passwort π. Dieses Passwort π ist beispielsweise in den Speichern 104, 154, insbesondere den geschützten Speicherbereichen 106, 156, hinterlegt und/oder wird etwa durch den Nutzer 100 über eine Nutzerschnittstelle dem ID-Tokens 102 und/oder Terminal 152 bereitgestellt. Beispielsweise hat der gemeinsame, geteilte symmetrische kryptographische Schlüssel die Form $K_\pi = KDF_\pi(\pi)$, wobei $KDF_\pi$ beispielsweise eine Schlüsselerzeugungsfunktion ist zum Erzeugen eines symmetrischen kryptographischen Schlüssels ist. In Schritt 402 wird die verschlüsselte Zufallszahl x an das Terminal 152 gesendet. Nach Ausführungsformen wird ferner ein statischer Domänenparameter $D_{Tok}$ des ID-Tokens 102 gesendet. In Schritt 404 entschlüsselt das Terminal 152 die verschlüsselte Zufallszahl x und erhält so die unverschlüsselte Zufallszahl s.

In Schritt 406 berechnet das Terminal 152 ein ephemeres asymmetrisches Terminal-Schlüsselpaar $\widetilde{SK_{Term}^P}$, $\widetilde{PK_{Term}^P}$ für das PACE-Verfahren. Ferner wird beispielsweise ein von der Zufallszahl s abhängiger ephemerer Domänenparameter $\widetilde{D(s)} = Map(D_{Tok}, s)$ unter Verwendung des statischen Domänenparameters $D_{Tok}$ berechnet. In Schritt 410 wird der erzeugte ephemere öffentliche kryptographische Terminal-Schlüssel $\widetilde{PK_{Term}^P}$ an den ID-Token 102 gesendet. In Schritt 410 berechnet der ID-Token ein ephemeres asymmetrisches ID-Token-Schlüsselpaar $\widetilde{SK_{Tok}^P}$, $\widetilde{PK_{Tok}^P}$ für das PACE-Verfahren. Ferner wird beispielsweise der von der Zufallszahl s abhängige ephemere Domänen-parameter $\widetilde{D(s)} = Map(D_{Tok}, s)$ berechnet. In Schritt 412 wird der erzeugte ephemere öffentliche kryptographische ID-Token-Schlüssel $\widetilde{PK_{Tok}^P}$ an das Terminal 152 gesendet. Die Schritte 406, 408 einerseits und die Schritte 410, 412 können gleichzeitig oder in beliebiger Reihenfolge ausgeführt werden. Nach Ausführungsformen wird

In Schritt 414 berechnet das Terminal 152 ein gemeinsames, geteiltes Geheimnis $K^P$ unter Verwendung des ephemeren privaten kryptographischen Terminal-Schlüssels $\widetilde{SK_{Term}^P}$ und des ephemeren öffentlichen kryptographi-schen ID-Token-Schlüssels $\widetilde{PK_{Term}^P}$, z.B. $K^P = KA\left(\widetilde{SK_{Term}^P}, \widetilde{PK_{Tok}^P}, \widetilde{D(s)}\right)$. In Schritt 416 berechnet der ID-Token 102 das gemeinsame, geteilte Geheimnis $K^P$ unter Verwendung des ephemeren öffentlichen kryptographischen Terminal-Schlüssels $\widetilde{PK_{Term}^P}$ und des ephemeren privaten kryptographischen ID-Token-Schlüssels $\widetilde{SK_{Term}^P}$, z.B. $K^P = KA\left(\widetilde{SK_{Tok}^P}, \widetilde{PK_{Term}^P}, \widetilde{D(s)}\right)$. Das gemeinsame, geteilte Geheimnis $K^P$ wird verwendet um ein Terminal-Authentifizierungstoken $T_{Term}^P$ und ein ID-Token-Authentifizierungstoken $T_{Tok}^P$ zu berechnen. Die Authentifizierungstoken $T_{Term}^P$, $T_{Tok}^P$ werden zwischen dem ID-Token 102 und dem Terminal 152 ausgetauscht und jeweils gegenseitig verifiziert.

In Schritt 418 berechnet das Terminal 152 den Terminal-Authentifizierungstoken $T_{Term}^P = MAC\left(K_{MAC}^P, \widetilde{PK_{Tok}^P}\right)$, welcher in Schritt 420 an den ID-Token 102 gesendet und in Schritt 422 durch diesen verifiziert wird. In Schritt 424 berechnet der ID-Token 102 den ID-Token-Authentifizierungstoken $T_{Tok}^P = MAC\left(K_{MAC}^P, \widetilde{PK_{Term}^P}\right)$, welcher in Schritt 426 an das Terminal 152 gesendet und in Schritt 428 durch diesen verifiziert wird. Der gemeinsame, geteilte symmetrische Signaturschlüssel $K_{MAC}^P$ hat beispielsweise die Form $K_{MAC}^P = KDF_{MAC}(K^P)$. Nach Ausführungsformen wird ferner ein symmetrischer Schlüssel $K_V^P = KDF_V(K^P)$ zum Verschlüsseln berechnet. Die beiden Schlüssel $K_{MAC}^P$ und $K_V^P$ können zum Implementieren eines Secure-Messaging-Verfahrens verwendet werden.

Anschließend werden in Schritt 430 eine Terminal-Authentifizierung, beispielsweise gemäß Schritten 300 bis 312 aus Figur 3, und in Schritt 433 eine ID-Token-Authentifizierung, beispielsweise gemäß Schritten 314 bis 326 aus Figur 3, ausgeführt.

Nach Ausführungsformen erfolgt das Übersenden der statischen öffentlichen Schlüssel in den Ausführungsformen des Verfahrens in den Figuren 3 und 4, indem die entsprechenden über eine kontaktlose oder kontaktbehaftete Kommunikationsverbindung zwischen ID-Token 102 und Terminal 152 übertragen werden. Nach Ausführungsformen werden die statischen öffentlichen Schlüssel jeweils von einem Terminal- bzw. ID-Token-Zertifikat umfasst und die entsprechenden statischen öffentlichen Schlüssel werden übertragen, indem ein die sie umfassenden Zertifikate übertragen werden. Nach weiteren Ausführungsformen werden anstelle der statischen öffentlichen Schlüssel statische Identifikatoren des Terminals 152 bzw. des ID-Tokens 102 übertragen, welche dazu verwendet werden, die entsprechenden statischen öffentlichen Schlüssel, welche von den Terminal- bzw. ID-Token-Zertifikatsinformationen umfasst werden, in der ersten bzw. zweiten Blockchain zu identifizieren. Für die Verfahren gemäß Figuren 3 und 4 werden die entsprechenden statischen öffentlichen Schlüssel dann aus der ersten bzw. zweiten Blockchain ausgelesen. Nach weiteren Ausführungsformen werden die statischen öffentlichen Schlüssel ohne Zertifikate übertragen und in der ersten bzw. zweiten Blockchain überprüft, ob die übertragenen statischen öffentlichen Schlüssel in einer der Blockchains für das entsprechende Terminal 152 bzw. den entsprechenden ID-Token 102 eingetragen sind. Sind die übertragenen statischen öffentlichen Schlüssel als gültig eingetragen, gelten diese als verifiziert, ohne dass eigenständige Zertifikate übertragen werden oder eine PKI geprüft wird. Die übertragenen statischen öffentlichen Schlüssel dienen somit nach Ausführungsformen quasi als Identifikatoren und die entsprechenden Einträge als Zertifikate.

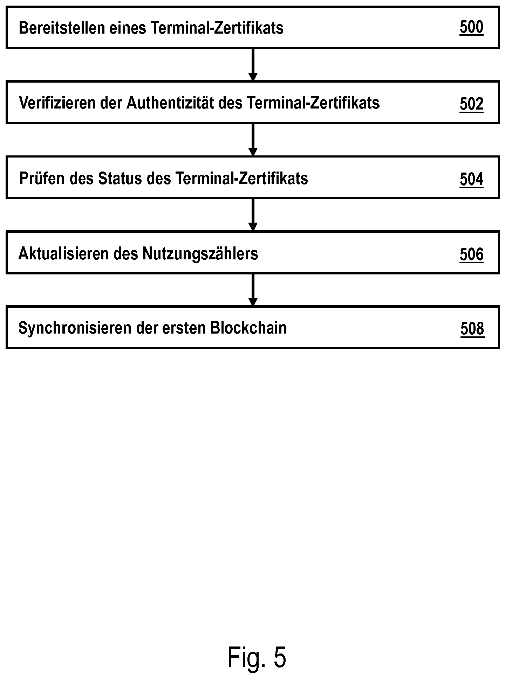

Figur 5 zeigt ein schematisches Blockdiagramm einer Ausführungsform der Terminal-Authentifizierung für ein Verfahren zur Kontrolle eines Zugriffs eines Terminals auf ein in einem ID-Token gespeichertes Attribut. Die Terminal-Authentifizierung umfasst eine Prüfung des Terminal-Zertifikats unter Verwendung von Terminal-Zertifikatsinformationen, welche die erste Blockchain bereitstellt, wobei ein statischer öffentlicher Terminal-Schlüssel valide ist und beispielsweise für die Ausführungsformen der Verfahren in Figuren 3 und 4 verwendet werden kann, wenn die Prüfung des Terminal-Zertifikats positiv ausfällt. In Schritt 500 wird das Terminal-Zertifikat dem ID-Token zur Prüfung bereitgestellt. Beispielsweise umfassen die Terminal-Zertifikatsinformationen der ersten Blockchain das Terminal-Zertifikat oder einen eindeutigen Prüfwert des Terminal-Zertifikats. Das Bereitstellen kann ferner beispielsweise ein Senden des Terminal-Zertifikats von dem Terminal an den ID-Token, ein Senden eines eindeutigen Prüferwerts des Terminal-Zertifikats, ein Senden eines Identifikators des Terminals zum Identifizieren des Terminal-Zertifikats in der ersten Blockchain oder ein Senden des statischen öffentlichen Terminal-Schlüssels umfassen. In Schritt 502 wird die Authentizität des Terminal-Zertifikats unter Verwendung der Terminal-Zertifikatsinformationen verifiziert. Hierzu wird geprüft, ob das Terminal-Zertifikat oder ein eindeutiger Prüfwert des Terminal-Zertifikats in der Blockchain eingetragen ist. Hierzu wird beispielsweise ein empfangenes Terminal-Zertifikat oder ein empfangener Prüfwert des Terminal-Zertifikats mit den Einträgen der ersten Blockchain verglichen oder anhand eines empfangenen Identifikators ein Eintrag in der Blockchain identifiziert. Nach Ausführungsformen kann auch ein empfangener statischer öffentlicher Terminal-Schlüssel auf Eintragung in die erste Blockchain geprüft werden. Zweck des Schritts 502 ist es festzustellen, ob der statische öffentliche Terminal-Schlüssel des entsprechenden Terminals in der ersten Blockchain vermerkt ist. In Schritt 504 wird der Status des Terminal-Zertifikats geprüft, d.h. es wird geprüft, ob das Terminal-Zertifikat noch oder wieder gültig ist. Hierzu wird beispielsweise geprüft, ob die erste Blockchain einen Sperreintrag zu dem Terminal-Zertifikat umfasst, ob ein Nutzungszähler des Terminals-Zertifikats in der ersten Blockchain abgelaufen ist und/oder das Terminal-Zertifikat für die vorliegende Aufgabe eine gültige Berechtigung umfasst, d.h. ob das Terminal-Zertifikat zum Zugriff auf das Attribut berechtigt. Ist das Terminal-Zertifikat gültig, ist die Terminal-Authentifizierung erfolgreich. In Schritt 506 wird der Nutzungszähler, falls die erste Blockchain einen solchen Nutzungszähler implementiert hat, auf die Freigabe des Zugriffs bzw. eine erfolgreiche Terminal-Authentifizierung hin aktualisiert. Ist der Nutzungszähler abgelaufen, so kann beispielsweise eine Anfrage auf ein Zurücksetzen des Nutzungszählers oder Ausstellen eines erneuerten Terminal-Zertifikats mit einem zurückgesetzten Nutzungszähler erstellt werden. Die Anfrage wird beispielsweise an eine Ausstellungsinstanz gesendet, welche die Zertifikate ausstellt. Nach Ausführungsformen kann es sich bei dieser Instanz um einen Blockchain-Server handeln.

Nach Ausführungsformen erfolgt eine Eintragung eines statischen öffentlichen Terminal-Schlüssels, eines Terminal-Zertifikats, oder eines eindeutigen Prüfwerts von dem statischen öffentlichen Terminal-Schlüssel und/oder Terminal-Zertifikat als Terminal-Zertifikatinformationen in die erste Blockchain auf eine einmalige erfolgreiche Verifizierung eines Terminal-Zertifikats unter Verwendung einer PKI hin. Weitere Verifizierungen können ohne PKI alleine unter Verwendung der Einträge in der ersten Blockchain erfolgen.

In Schritt 508 wird die erste Blockchain synchronisiert. Die Synchronisation erfolgt mit weiteren Versionen der ersten Blockchain, welche beispielsweise von weiteren ID-Token verwendet werden, und/oder mit weiteren Versionen der ersten Blockchain, welche ein oder mehrere Blockchain-Server bereitstellen. Nach Ausführungsformen handelt es sich bei Schritt 508 um einen fakultativen Schritt.

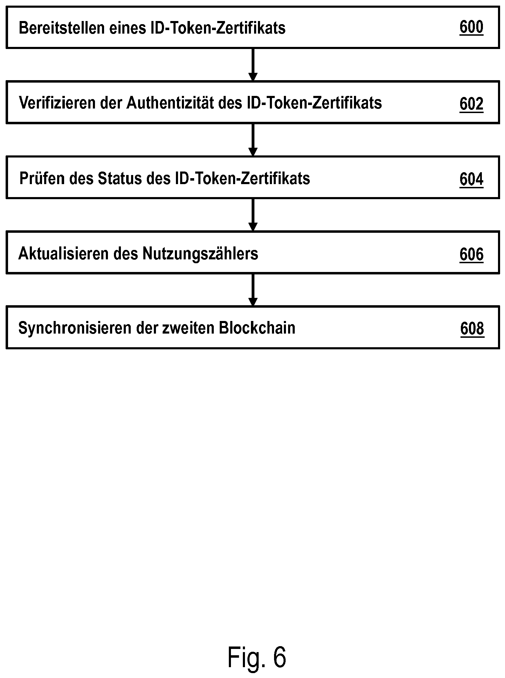

Figur 6 zeigt ein schematisches Blockdiagramm einer Ausführungsform der ID-Token-Authentifizierung für das Verfahren zur Kontrolle eines Zugriffs des Terminals auf das in dem ID-Token gespeichertes Attribut. Die ID-Token-Authentifizierung umfasst eine Prüfung des ID-Token-Zertifikats unter Verwendung von ID-Token-Zertifikatsinformationen, welche die zweite Blockchain bereitstellt, wobei ein statischer öffentlicher ID-Token-Schlüssel valide ist und beispielsweise für die Ausführungsformen der Verfahren in Figuren 3 und 4 verwendet werden kann, wenn die Prüfung des ID-Token-Zertifikats positiv ausfällt. In Schritt 600 wird das ID-Token-Zertifikat dem Terminal zur Prüfung bereitgestellt. Beispielsweise umfassen die ID-Token-Zertifikatsinformationen der zweiten Blockchain das ID-Token-Zertifikat oder einen eindeutigen Prüfwert des ID-Token-Zertifikats. Das Bereitstellen kann ferner beispielsweise ein Senden des ID-Token-Zertifikats von dem ID-Token an das Terminal, ein Senden eines eindeutigen Prüferwerts des ID-Token-Zertifikats, ein Senden eines Identifikators des ID-Tokens zum Identifizieren des ID-Token-Zertifikats in der zweiten Blockchain oder ein Senden des statischen öffentlichen ID-Token-Schlüssels umfassen. In Schritt 602 wird die Authentizität des ID-Token-Zertifikats unter Verwendung der ID-Token-Zertifikatsinformationen verifiziert. Hierzu wird geprüft, ob das ID-Token-Zertifikat oder ein eindeutiger Prüfwert des ID-Token-Zertifikats in der Blockchain eingetragen ist. Hierzu wird beispielsweise ein empfangenes ID-Token-Zertifikat oder ein empfangener Prüfwert des ID-Token-Zertifikats mit den Einträgen der zweiten Blockchain verglichen oder anhand eines empfangenen Identifikators ein Eintrag in der Blockchain identifiziert. Nach Ausführungsformen kann auch ein empfangener statischer öffentlicher ID-Token-Schlüssel auf Eintragung in die zweite Blockchain geprüft werden. Zweck des Schritts ist es festzustellen, ob der statische öffentliche ID-Token-Schlüssel des entsprechenden ID-Tokens in der zweiten Blockchain vermerkt ist. In Schritt 604 wird der Status des ID-Token-Zertifikats geprüft, d.h. es wird geprüft, ob das ID-Token-Zertifikat noch oder wieder gültig ist. Hierzu wird beispielsweise geprüft, ob die zweite Blockchain einen Sperreintrag zu dem ID-Token-Zertifikat umfasst und/oder ob ein Nutzungszähler des ID-Token-Zertifikat in der ersten Blockchain abgelaufen ist, d.h. ob das Terminal-Zertifikat zum Zugriff auf das Attribut berechtigt. Ist das ID-Token-Zertifikat gültig, ist auch die ID-Token-Authentifizierung erfolgreich. Auf eine erfolgreiche Terminal- und ID-Token-Authentifizierung hin wird der Zugriff auf das Attribut freigegeben. In Schritt 606 wird der Nutzungszähler, falls die zweite Blockchain einen solchen Nutzungszähler implementiert hat, auf die Freigabe des Zugriffs bzw. eine erfolgreiche ID-Token-Authentifizierung hin aktualisiert. Ist der Nutzungszähler abgelaufen, so kann beispielsweise eine Anfrage auf ein Zurücksetzen des Nutzungszählers oder Ausstellen eines erneuerten ID-Token-Zertifikats mit einem zurückgesetzten Nutzungszähler erstellt werden. Die Anfrage wird beispielsweise an eine Ausstellungsinstanz gesendet, welche die Zertifikate ausstellt. Nach Ausführungsformen kann es sich bei dieser Instanz um einen Blockchain-Server handeln.

Nach Ausführungsformen erfolgt eine Eintragung eines statischen öffentlichen ID-Token-Schlüssels, eines ID-Token-Zertifikats, oder eines eindeutigen Prüfwerts von dem statischen öffentlichen ID-Token-Schlüssel und/oder ID-Token-Zertifikat als ID-Token-Zertifikatinformationen in die zweite Blockchain auf eine einmalige erfolgreiche Verifizierung eines ID-Token-Zertifikats unter Verwendung einer PKI hin. Weitere Verifizierungen können ohne PKI alleine unter Verwendung der Einträge in der zweiten Blockchain erfolgen.

In Schritt 608 wird die zweite Blockchain synchronisiert. Die Synchronisation erfolgt mit weiteren Versionen der zweiten Blockchain, welche beispielsweise von weiteren Terminals verwendet werden, und/oder mit weiteren Versionen der zweiten Blockchain, welche ein oder mehrere Blockchain-Server bereitstellen. Nach Ausführungsformen handelt es sich bei Schritt 608 um einen fakultativen Schritt.

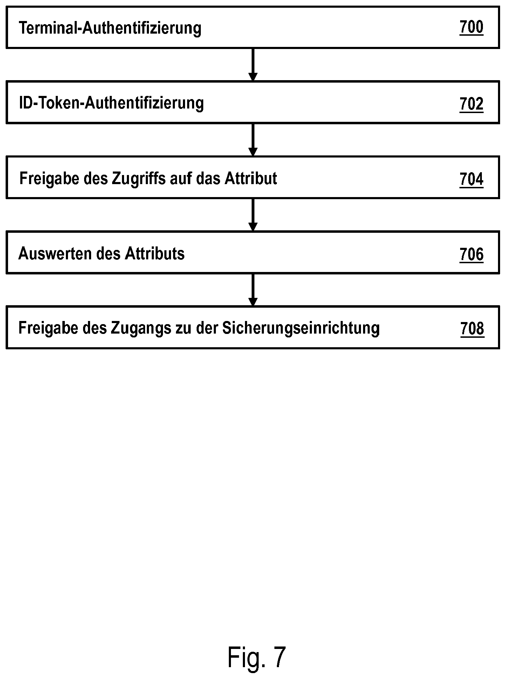

Figur 7 zeigt ein schematisches Blockdiagramm einer Ausführungsform eines Verfahrens zur Freigabe eines Zugangs zu einer Sicherungseinrichtung, welches das Verfahren zur Kontrolle des Zugriffs des Terminals auf das in dem ID-Token gespeichertes Attribut umfasst. In Schritt 700 erfolgt eine Terminal-Authentifizierung, beispielswiese nach einer oder mehreren der Ausführungsformen gemäß Figur 3, 4 und/oder 5. Die Terminal-Authentifizierung erfolgt beispielsweise in Antwort auf einen Empfang einer Leseanfrage nach einem oder mehr in dem Speicher des ID-Tokens gespeicherten Attributen. In Schritt 702 erfolgt eine ID-Token-Authentifizierung, beispielswiese nach einer oder mehreren der Ausführungsformen gemäß Figur 3, 4 und/oder 6. Auf eine erfolgreiche Terminal- und ID-Token-Authentifizierung hin gibt der ID-Token in Schritt 704 den Zugriff auf das Attribut für das Terminal frei, welcher das Attribut ausliest. In Schritt 706 wird das ausgelesene Attribut ausgewertet. Erfüllt das ausgelesene Attribut ein vordefiniertes Kriterium, stimmt es beispielsweise mit einem Referenzwert überein oder ist es von einem Referenzparameterbereich umfasst, wird in Schritt 708 der Zugang zu der Sicherungseinrichtung freigegeben.

Bezugszeichenliste

| 100 | Nutzer |
|-----|--------|
| 102 | ID-Token |
| 104 | Speicher |
| 106 | geschützter Speicherbereich |
| 108 | privater ID-Token-Schlüssel |
| 109 | Attribut |
| 110 | öffentlicher ID-Token-Schlüssel |
| 112 | ID-Token-Zertifikat |
| 114 | erste Blockchain |

115     ID-Token-Zertifikatsinformationen
116     Prozessor
118     kryptographisches Protokoll
120     Programminstruktionen
122     Kommunikationsschnittstelle
152     Terminal
154     Speicher
156     geschützter Speicherbereich
158     privater Terminal-Schlüssel
160     öffentlicher Terminal-Schlüssel
162     Terminal-Zertifikat
164     zweite Blockchain
165     Terminal-Zertifikatsinformationen
166     Prozessor
168     kryptographisches Protokoll
170     Programminstruktionen
172     Kommunikationsschnittstelle
180     System
182     Sicherungssystem
190     Netzwerk
202     Blockchain-Server
204     Speicher
206     Prozessor
208     kryptographisches Protokoll
210     Programminstruktionen
212     Kommunikationsschnittstelle
220     Sicherungseinrichtung
222     Verriegelungsvorrichtung
224     Kommunikationsschnittstelle

**Patentansprüche**

1.  Verfahren zur Kontrolle eines Zugriffs eines Terminals (152) auf ein in einem ID-Token (102) gespeichertes Attribut (109), wobei Terminal-Zertifikatsinformationen (165) zu einem dem Terminal (152) zugeordneten Terminal-Zertifikat (162) in einem oder mehreren Einträgen einer ersten Blockchain (114) gespeichert sind, wobei die erste Blockchain (114) in einem ersten Speicher (104) des ID-Tokens (102) gespeichert ist, wobei ID-Token-Zertifikatsinformationen (115) zu einem dem ID-Token (102) zugeordneten ID-Token-Zertifikat (112) in einem oder mehreren Einträgen einer zweiten Blockchain (164) gespeichert sind, wobei die zweite Blockchain (164) in einem zweiten Speicher (154) des Terminals (152) gespeichert ist, wobei das Verfahren umfasst:

    • Ausführen einer Terminal-Authentifizierung, wobei das Terminal (152) durch den ID-Token (102) unter Verwendung des Terminal-Zertifikats (162) und der Terminal-Zertifikatsinformationen (165) der zweiten Blockchain (164) authentifiziert wird,
    • Ausführen einer ID-Token-Authentifizierung, wobei der ID-Token (102) durch das Terminal (152) unter Verwendung des ID-Token-Zertifikats (112) und der ID-Token-Zertifikatsinformationen (115) der ersten Blockchain (114) authentifiziert wird,
    • auf eine erfolgreiche Terminal-Authentifizierung und eine erfolgreiche ID-Token-Authentifizierung hin, Freigabe des Zugriffs des Terminals (152) auf das in dem ID-Token (102) gespeicherte Attribut (109).

2.  Verfahren nach Anspruch 1, wobei die Terminal-Authentifizierung ferner umfasst:

    • Verifizieren der Authentizität des Terminal-Zertifikats (162) unter Verwendung der von der ersten Blockchain (114) bereitgestellten Terminal-Zertifikatinformationen (115), wobei eine erfolgreiche Terminal-Authentifizierung eine erfolgreiche Verifizierung der Authentizität des Terminal-Zertifikats (162) voraussetzt, und/oder

    wobei die Terminal-Authentifizierung ferner umfasst:

• Prüfen des Status des Terminal-Zertifikats (162) unter Verwendung der von der ersten Blockchain (114) bereitgestellten Terminal-Zertifikatinformationen (115), und/oder

wobei die ID-Token-Authentifizierung ferner umfasst:

• Verifizieren der Authentizität des ID-Token-Zertifikats (112) unter Verwendung der von der zweiten Blockchain (164) bereitgestellten ID-Token-Zertifikatinformationen (115), wobei eine erfolgreiche ID-Token-Authentifizierung eine erfolgreiche Verifizierung der Authentizität des ID-Token-Zertifikats (112) voraussetzt, und/oder

wobei die ID-Token-Authentifizierung ferner umfasst:

• Prüfen des Status des ID-Token-Zertifikats (112) unter Verwendung der von der zweiten Blockchain (164) bereitgestellten ID-Token-Zertifikatinformationen (115).

3. Verfahren nach einem der vorhergehenden Ansprüche, wobei das Terminal-Zertifikat (162) einen dem Terminal (152) zugeordneten statischen öffentlichen Terminal-Schlüssel (160) umfasst, wobei in einem geschützten Speicherbereich (156) des zweiten Speichers (154) des Terminals (152) ein statischer privater Terminal-Schlüssel (158) gespeichert ist, welcher zusammen mit dem statischen öffentlichen Terminal-Schlüssel (160) ein statisches asymmetrisches Terminal-Schlüsselpaar bildet, und wobei die Terminal-Authentifizierung zum Bereitstellen des Terminal-Zertifikats (162) ferner umfasst:

• Empfangen des Terminal-Zertifikats (162) mit dem statischen öffentlichen Terminal-Schlüssel (160) von dem Terminal (152) durch den ID-Token (102), und/oder

wobei das ID-Token-Zertifikat (112) einen dem ID-Token (102) zugeordneten statischen öffentlichen ID-Token-Schlüssel (110) umfasst, wobei in einem geschützten Speicherbereich (106) des ersten Speichers (104) des ID-Tokens (102) ein statischer privater ID-Token-Schlüssel (108) gespeichert ist, welcher zusammen mit dem statischen öffentlichen ID-Token-Schlüssel (110) ein statisches asymmetrisches ID-Token-Schlüsselpaar bildet, wobei die ID-Token-Authentifizierung zum Bereitstellen des ID-Token-Zertifikats (112) ferner umfasst:

• Empfangen des ID-Token-Zertifikats (112) mit dem statischen öffentlichen ID-Token-Schlüssel (110) von dem ID-Token (102) durch den Terminal (152).

4. Verfahren nach einem der Ansprüche 1 bis 2, wobei das Terminal-Zertifikat (162) mit dem statischen öffentlichen Terminal-Schlüssel (160) von den Terminal-Zertifikatsinformationen (165) umfasst wird und wobei das Bereitstellen des Terminal-Zertifikats (162) ein Empfangen eines Identifikators des Terminal-Zertifikats (162) von dem Terminal (152) durch den ID-Token (102) umfasst, anhand dessen die zugehörigen Zertifikatsinformationen in der ersten Blockchain (114) identifiziert und ausgelesen werden können, und/oder
wobei das ID-Token-Zertifikat (112) mit dem statischen öffentlichen ID-Token-Schlüssel (110) von den ID-Token-Zertifikatsinformationen (115) umfasst wird und wobei das Bereitstellen des ID-Token-Zertifikats (112) ein Empfangen eines Identifikators des ID-Token-Zertifikats (112) von dem ID-Token (102) durch das Terminal (152) umfasst, anhand dessen die zugehörigen ID-Token-Zertifikatsinformationen (115) in der zweiten Blockchain (164) identifiziert und ausgelesen werden können.

5. Verfahren nach einem der vorhergehenden Ansprüche, wobei die Zugriffskontrolle in einem Offline-Modus des ID-Tokens (102) und/oder des Terminals (152) erfolgt, und/oder
wobei es sich bei der ersten und zweiten Blockchain (114, 164) um eine gemeinsame Blockchain handelt.

6. Verfahren nach einem der vorhergehenden Ansprüche, wobei das Verfahren ferner umfasst: auf die Freigabe des Zugriffs auf das gespeicherte Attribut (109) hin, Eintragen eines aktualisierten Nutzungszählers des Terminal-Zertifikats (162) in die erste Blockchain (114), wobei der den aktualisierten Nutzungszähler umfassende Eintrag den Identifikator des Terminal-Zertifikats (162) umfasst.

7. Verfahren nach Anspruch 6, wobei die Terminal-Zertifikatsinformationen (165) einen Anfangswert des Nutzungszählers vorgeben und der Wert des Nutzungszählers bei jeder Aktualisierung dekrementiert wird, wobei das Terminal-Zertifikat (162) seine Gültigkeit verliert, sobald der Nutzungszähler einen unteren Grenzwert erreicht, oder wobei die Terminal-Zertifikatsinformationen (165) einen oberen Grenzwert für den Nutzungszähler vorgeben und der Wert des Nutzungszählers bei jeder Aktualisierung inkrementiert wird, wobei das Terminal-Zertifikat (162) seine Gültigkeit verliert, sobald der Nutzungszähler den oberen Grenzwert erreicht, und/oder
wobei die erste Blockchain (114) in einem Block ein Programmmodul mit Programminstruktionen (120) umfasst, wobei auf die Freigabe des Zugriffs auf das gespeicherte Attribut (109) hin, das Programmmodul aufgerufen wird und die Programminstruktionen (120) ausgeführt werden, wobei durch das Ausführen der Programminstruktionen (120) das Aktualisieren des Nutzungszählers des Terminal-Zertifikats (162) unter Verwendung der Terminal-Zertifikatsinformationen (165) gesteuert wird.

8. Verfahren nach einem der vorhergehenden Ansprüche, wobei der ID-Token (102) die erste Blockchain (114) auf die Freigabe des Zugriffs auf das gespeicherte Attribut (109) hin über das Terminal (152) und ein mit dem Terminal (152) verbundenes Netzwerk (190) synchronisiert, und/oder
wobei das Terminal (152) die zweite Blockchain (164) über das Netzwerk (190) synchronisiert, und/oder
wobei die erste Blockchain (114) eine Mehrzahl von Terminal-Zertifikatsinformationen (165) zu einer Mehrzahl von Terminal-Zertifikaten (162) einer Mehrzahl von Terminals (152) umfasst, und/oder
wobei die zweite Blockchain (164) eine Mehrzahl von ID-Token-Zertifikatsinformationen (115) zu einer Mehrzahl von ID-Token-Zertifikaten (112) einer Mehrzahl von ID-Token (102) umfasst, und/oder
wobei die Terminal-Zertifikatsinformationen (165) einen Identifikator des Terminal-Zertifikats (162) und einen Prüfwert des Terminal-Zertifikats (162) umfassen, und/oder
wobei die ID-Token-Zertifikatsinformationen (115) einen Identifikator des ID-Token-Zertifikats (112) und einen Prüfwert des ID-Token-Zertifikats (112) umfassen, und/oder
wobei zum Sperren des Terminal-Zertifikats (162) ein erster Sperreintrag in die erste Blockchain (114) eingetragen wird, wobei der erste Sperreintrag den Identifikator des Terminal-Zertifikats (162) umfasst, und/oder
wobei zum Sperren des ID-Tokens (102) ein zweiter Sperreintrag in die zweite Blockchain (164) eingetragen wird, wobei der zweite Sperreintrag den Identifikator des ID-Token-Zertifikats (112) umfasst, und/oder
wobei die Terminal-Zertifikatsinformationen (165) Berechtigungen des Terminals (152) definieren und eine Änderung der Berechtigungen des Terminals (152) als Eintrag zu der ersten Blockchain (114) hinzugefügt wird, wobei der entsprechende Eintrag den Identifikator des Terminal-Zertifikats (162) umfasst, und/oder
wobei die ID-Token-Zertifikatsinformationen (115) Berechtigungen des ID-Token (102) definieren und eine Änderung von Berechtigungen des ID-Tokens (102) als Eintrag zu der zweiten Blockchain (164) hinzugefügt wird, wobei der entsprechende Eintrag den Identifikator des ID-Token-Zertifikats (112) umfasst.

9. Verfahren nach einem der vorhergehenden Ansprüche, wobei die Terminal-Authentifizierung ferner umfasst:

   • Empfangen einer ersten Nachricht von dem Terminal (152) durch den ID-Token (102), wobei die erste Nachricht eine erste unter Verwendung des statischen privaten Terminal-Schlüssels (158) erzeugte Signatur aufweist,
   • Verifizieren der Authentizität der ersten Nachricht, wobei das Verifizieren der ersten Nachricht ein Verifizieren der ersten Signatur unter Verwendung des von dem Terminal-Zertifikat (162) umfassten statischen öffentlichen Terminal-Schlüssels (160) umfasst.

10. Verfahren nach Anspruch 9, wobei die Terminal-Authentifizierung ferner umfasst:

    • Erzeugen eines zufälligen ersten Geheimnisses durch den ID-Token (102),
    • Senden des zufälligen ersten Geheimnisses durch den ID-Token (102) an das Terminal (152),

    wobei die erste Nachricht in Antwort auf das Senden des zufälligen ersten Geheimnisses empfangen wird und das gesendete zufällige erste Geheimnisse umfasst,
    wobei das Verifizieren der ersten Signatur ferner unter Verwendung des zufälligen ersten Geheimnisses erfolgt.

11. Verfahren nach einem Ansprüche 9 bis 10, wobei die ID-Token-Authentifizierung ein Erzeugen eines gemeinsamen, geteilten Geheimnisses von ID-Token (102) und Terminal (152) umfasst, wobei das Erzeugen des gemeinsamen, geteilten Geheimnisses umfasst:

    • Erzeugen eines ephemeren asymmetrischen Terminal-Schlüsselpaars durch das Terminal (152) umfasst, wobei das erzeugte asymmetrische Terminal-Schlüsselpaar einen ephemeren öffentlichen Terminal-Schlüssel und einen ephemeren privaten Terminal-Schlüssel umfasst,
    • Erzeugen des gemeinsamen, geteilten Geheimnisses durch das Terminal (152) unter Verwendung des ephemeren privaten Terminal-Schlüssels und des statischen öffentlichen ID-Token-Schlüssels (110),
    • Senden des ephemeren öffentlichen Terminal-Schlüssels durch das Terminal (152) an den ID-Token (102),
    • Erzeugen des gemeinsamen, geteilten Geheimnisses durch den ID-Token (102) unter Verwendung des statischen privaten ID-Token-Schlüssels (108) und des empfangenen ephemeren öffentlichen Terminal-Schlüssels.

12. Verfahren nach Anspruch 11, wobei die ID-Token-Authentifizierung ferner umfasst:

• Empfangen eines zufälligen zweiten Geheimnisses von dem ID-Token (102) durch das Terminal (152),
• Empfangen einer zweiten Nachricht von dem ID-Token (102) durch das Terminal (152), wobei die zweite Nachricht eine zweite unter Verwendung eines gemeinsamen Signaturschlüssels erzeugte Signatur aufweist, wobei der gemeinsamen Signaturschlüssel unter Verwendung des gemeinsamen, geteilten Geheimnisses und des zufälligen zweiten Geheimnisses erzeugt ist,
• Erzeugen des gemeinsamen Signaturschlüssels durch das Terminal (152) unter Verwendung des erzeugten gemeinsamen, geteilten Geheimnisses und des empfangenen zufälligen zweiten Geheimnisses,
• Verifizieren der Authentizität der zweiten Nachricht, wobei das Verifizieren der zweiten Nachricht ein Verifizieren der zweiten Signatur unter Verwendung empfangenen zufälligen zweiten Geheimnisses und des durch das Terminal (152) erzeugten gemeinsamen Signaturschlüssels umfasst, und/oder

wobei das Terminal (152) das Erzeugen des ephemeren asymmetrischen Terminal-Schlüsselpaars bereits im Zuge der Terminal-Authentifizierung ausführt, wobei das Terminal (152) den ephemeren öffentlichen Terminal-Schlüssel an den ID-Token (102) sendet, wobei zusätzlich die erste Nachricht den ephemeren öffentlichen Terminal-Schlüssel umfasst, wobei das Verifizieren der ersten Signatur ferner unter Verwendung des ephemeren öffentlichen Terminal-Schlüssels erfolgt und

wobei der ID-Token (102) zum Verifizieren der Authentizität des ephemeren öffentlichen Terminal-Schlüssels den zum Verifizieren der ersten Nachricht verwendeten ephemeren öffentlichen Terminal-Schlüssel mit dem im Zuge der ID-Authentifizierung empfangenen ephemeren öffentlichen Terminal-Schlüssel vergleicht, um die Authentizität des empfangenen ephemeren öffentlichen Terminal-Schlüssel zu verifizieren.

13. System (180) zur Kontrolle eines Zugriffs eines Terminals (152) auf ein in einem ID-Token (102) gespeichertes Attribut (109), welches umfasst:

• den ID-Token (102) mit einer ersten Kommunikationsschnittstelle (122), einem ersten Prozessor (116) und einem ersten Speicher (104), wobei der erste Speicher (104) computerlesbare erste Programminstruktionen (120) enthält, wobei Terminal-Zertifikatsinformationen (165) zu einem dem Terminal (152) zugeordneten Terminal-Zertifikat (162) in einem oder mehreren Einträgen einer ersten Blockchain (114) gespeichert sind, wobei die erste Blockchain (114) in dem ersten Speicher (104) gespeichert ist,
• das Terminal (152) mit einer zweiten Kommunikationsschnittstelle (172), einem zweiten Prozessor (166) und einem zweiten Speicher (154), wobei der zweite Speicher (154) computerlesbare zweite Programminstruktionen (170) enthält, wobei ID-Token-Zertifikatsinformationen (115) zu einem dem ID-Token (102) zugeordneten ID-Token-Zertifikat (112) in einem oder mehreren Einträgen einer zweiten Blockchain (164) gespeichert sind, wobei die zweite Blockchain (164) in dem zweiten Speicher (154) gespeichert ist,

wobei die erste und zweite Kommunikationsschnittstelle (122, 172) dazu konfiguriert sind, miteinander zu kommunizieren, und wobei der erste Prozessor (116) bei einem Ausführen der ersten Programminstruktionen (120) den ID-Token (102) so steuert, dass der ID-Token (102) gemeinsam mit dem Terminal (152) ein Verfahren nach einem der vorhergehenden Ansprüche ausführt, und wobei der zweite Prozessor (166) bei einem Ausführen der zweiten Programminstruktionen (170) das Terminal (152) so steuert, dass das Terminal (152) gemeinsam mit dem ID-Token (102) ein Verfahren nach einem der vorhergehenden Ansprüche ausführt.

14. Verfahren zur Freigabe eines Zugangs zu einer Sicherungseinrichtung (220), welche den Zugang zu beschränkten Ressourcen regelt, mittels eines ID-Tokens (102) und eines Terminals (152), wobei das Verfahren umfasst:

• Durchführen des Verfahrens nach einem der vorhergehenden Ansprüche 1 bis 12 durch den ID-Token (102) und das Terminal (152),
• auf die Freigabe des Zugriffs des Terminals (152) auf das dem ID-Token (102) gespeicherte Attribut (109) hin, Auslesen des Attributs (109) durch das Terminal (152),
• Verifizieren des ausgelesenen Attributs (109) durch das Terminal (152), wobei Terminal (152) im Falle eines erfolgreichen Verifizierens des Attributs (109) den Zugang zu der Sicherungseinrichtung (220) freigibt.

15. Sicherungssystem (182), welches ein System (180) nach Anspruch 13 und eine Sicherungseinrichtung (220) umfasst, welche den Zugang zu beschränkten Ressourcen regelt, wobei das Ausführen der zweiten Programminstruktionen (170) durch den zweiten Prozessor (1166) das Terminal (152) ferner dazu veranlassen, auf die Freigabe des Zugriffs des Terminals (152) auf das dem ID-Token (102) gespeicherte Attribut (109) hin, das Attribut (109) auszulesen, das ausgelesene Attributs (109) zu verifizieren und im Falle eines erfolgreichen Verifizierens des Attributs (109) den Zugang zu der Sicherungseinrichtung (220) freizugeben.

**Claims**

1. A method for controlling access of a terminal (152) to an attribute (109) stored in an ID token (102), wherein terminal certificate information items relating to a terminal certificate (162) associated with the terminal (152) are stored in one or more entries of a first blockchain (114), wherein the first blockchain (114) is stored in a first memory (104) of the ID token (102), wherein ID token certificate information items (115) relating to an ID token certificate (112) associated with the ID token (102) are stored in one or more entries of a second blockchain (164), wherein the second blockchain (164) is stored in a second memory (154) of the terminal (152), wherein the method comprises:

   • executing a terminal authentication, wherein the terminal (152) is authenticated by the ID token (102) with use of the terminal certificate (162) and the terminal certificate information items (165) of the second blockchain (164),
   • executing an ID token authentication, wherein the ID token (102) is authenticated by the terminal (152) with use of the ID token certificate (112) and the ID token certificate information items (115) of the first blockchain (114),
   • in response to a successful terminal authentication and a successful ID token authentication, granting the terminal (152) access to the attribute (109) stored in the ID token (102).

2. The method according to claim 1, wherein the terminal authentication also comprises:

   • verifying the authenticity of the terminal certificate (162) with use of the terminal certificate information items (115) provided by the first blockchain (114), wherein a successful terminal authentication presupposes a successful verification of the authenticity of the terminal certificate (162), and/or

   wherein the terminal authentication also comprises:

   • checking the status of the terminal certificate (162) with use of the terminal certificate information items (115) provided by the first blockchain (114), and/or

   wherein the ID token authentication also comprises:

   • verifying the authenticity of the ID token certificate (112) with use of the ID token certificate information items (115) provided by the second blockchain (164), wherein a successful ID token authentication presupposes a successful verification of the authenticity of the ID token certificate (112), and/or

   wherein the ID token authentication also comprises:

   • checking the status of the ID token certificate (112) with use of the ID token certificate information items (115) provided by the second blockchain (164).

3. The method according to either one of the preceding claims, wherein the terminal certificate (162) comprises a static public terminal key (160) associated with the terminal (152), wherein a static private terminal key (158) is stored in a protected memory area (156) of the second memory (154) of the terminal (152) and together with the static public terminal key (160) forms a static asymmetric terminal key pair, and wherein the terminal authentication, for providing the terminal certificate (162), also comprises:

   • receiving of the terminal certificate (162) with the static public terminal key (160) by the ID token (102) from the terminal (152), and/or

   wherein the ID token certificate (112) comprises a static public ID token key (110) associated with the ID token (102), wherein a static private ID token key (108) is stored in a protected memory area (106) of the first memory (104) of the ID token (102) and together with the static public ID token key (110) forms a static asymmetric ID token key pair, wherein the ID token authentication, for providing the ID token certificate (112), also comprises:

• receiving of the ID token certificate (112) with the static public ID token key (110) by the terminal (152) from the ID token (102).

4. The method according to either one of claims 1 or 2, wherein the terminal certificate (162) with the static public terminal key (160) is comprised by the terminal certificate information items (165), and wherein the providing of the terminal certificate (162) comprises a receiving of an identifier of the terminal certificate (162) from the terminal (152) by the ID token (102), on the basis of which the associated certificate information items in the first blockchain (114) may be identified and read, and/or
wherein the ID token certificate (112) with the static public ID token key (110) is comprised by the ID token certificate information items (115), and wherein the providing of the ID token certificate (112) comprises a receiving of an identifier of the ID token certificate (112) from the ID token (102) by the terminal (152), on the basis of which the associated ID token certificate information items (115) in the second blockchain (164) may be identified and read.

5. The method according to any one of the preceding claims, wherein the access control occurs in an offline mode of the ID token (102) and/or of the terminal (152), and/or
wherein the first and second blockchain (114, 164) are a common blockchain.

6. The method according to any one of the preceding claims, wherein the method also comprises: upon the granting of access to the stored attribute (109), entering an updated use counter of the terminal certificate (162) into the first blockchain (114), wherein the entry comprising the updated use counter comprises the identifier of the terminal certificate (162) .

7. The method according to claim 6, wherein the terminal certificate information items (165) specify a starting value of the use counter and the value of the use counter is decremented with each update, wherein the terminal certificate (162) loses its validity as soon as the use counter reaches a lower limit value, or wherein the terminal certificate information items (165) specify an upper limit value for the use counter and the value of the use counter is incremented with each update, wherein the terminal certificate (162) loses its validity as soon as the use counter reaches the upper limit value, and/or
wherein the first blockchain (114) in a block comprises a program module with program instructions (120), wherein, upon the granting of access to the stored attribute (109), the program module is called up and the program instructions (120) are executed, wherein the updating of the use counter of the terminal certificate (162) with use of the terminal certificate information items (165) is controlled by the execution of the program instructions (120).

8. The method according to any one of the preceding claims, wherein the ID token (102), upon the granting of access to the stored attribute (109), synchronises the first blockchain (114) via the terminal (152) and a network (190) connected to the terminal (152), and/or
wherein the terminal (152) synchronises the second blockchain (164) via the network (190), and/or
wherein the first blockchain (114) comprises a plurality of terminal certificate information items (165) relating to a plurality of terminal certificates (162) of a plurality of terminals (152), and/or
wherein the second blockchain (164) comprises a plurality of ID token certificate information items (115) relating to a plurality of ID token certificates (112) of a plurality of ID tokens (102), and/or
wherein the terminal certificate information items (165) comprise an identifier of the terminal certificate (162) and a test value of the terminal certificate (162), and/or
wherein the ID token certificate information items (115) comprise an identifier of the ID token certificate (112) and a test value of the ID token certificate (112), and/or
wherein, in order to block the terminal certificate (162), a first blocking entry is entered into the first blockchain (114), wherein the first blocking entry comprises the identifier of the terminal certificate (162), and/or
wherein, in order to block the ID token (102), a second blocking entry is entered into the second blockchain (164), wherein the second blocking entry comprises the identifier of the ID token certificate (112), and/or
wherein the terminal certificate information items (165) define authorisations of the terminal (152) and a modification of the authorisations of the terminal (152) is added as entry to the first blockchain (114), wherein the corresponding entry comprises the identifier of the terminal certificate (162), and/or
wherein the ID token certificate information items (115) define authorisations of the ID token (102) and a modification of authorisations of the ID token (102) is added as entry to the second blockchain (164), wherein the corresponding entry comprises the identifier of the ID token certificate (112).

9. The method according to any one of the preceding claims, wherein the terminal authentication also comprises:

• receiving a first message from the terminal (152) by the ID token (102), wherein the first message includes a first signature generated with use of the static private terminal key (158),
• verifying the authenticity of the first message, wherein the verification of the first message comprises a verification of the first signature with use of the static public terminal key (160) comprised by the terminal certificate (162).

10. The method according to claim 9, wherein the terminal authentication also comprises:

• generating a random first secret by the ID token (102),
• sending the random first secret by the ID token (102) to the terminal (152),

wherein the first message is received in response to the sending of the random first secret and comprises the sent random first secret,
wherein the first signature is also verified with use of the random first secret.

11. The method according to either one of claims 9 or 10, wherein the ID token authentication comprises a generation of a common, shared secret by ID token (102) and terminal (152), wherein the generation of the common, shared secret comprises:

• generation of an ephemeral asymmetric terminal key pair by the terminal (152), wherein the generated asymmetric terminal key pair comprises an ephemeral public terminal key and an ephemeral private terminal key,
• generation of the common, shared secret by the terminal (152) with use of the ephemeral private terminal key and the static public ID token key (110),
• sending of the ephemeral public terminal key by the terminal (152) to the ID token (102),
• generation of the common, shared secret by the ID token (102) with use of the static private ID token key (108) and the received ephemeral public terminal key.

12. The method according to claim 11, wherein the ID token authentication also comprises:

• receiving of a random second secret by the terminal (152) from the ID token (102),
• receiving of a second message by the terminal (152) from the ID token (102), wherein the second message has a second signature generated with use of a common signature key, wherein the common signature key is generated with use of the common, shared secret and the random second secret,
• generation of the common signature key by the terminal (152) with use of the generated common, shared secret and the received random second secret,
• verifying of the authenticity of the second message, wherein the verification of the second message comprises a verification of the second signature with use of the received random second secret and the common signature key generated by the terminal (152), and/or

wherein the terminal (152) executes the generation of the ephemeral asymmetric terminal key pair already during the course of the terminal authentication, wherein the terminal (152) sends the ephemeral public terminal key to the ID token (102), wherein additionally the first message comprises the ephemeral public terminal key, wherein the first signature is also verified with use of the ephemeral public terminal key, and
wherein the ID token (102), for verification of the authenticity of the ephemeral public terminal key, compares the ephemeral public terminal key used to verify the first message with the ephemeral public terminal key received during the course of the ID authentication in order to verify the authenticity of the received ephemeral public terminal key.

13. A system (180) for controlling access of a terminal (152) to an attribute (109) stored in an ID token (102), which system comprises:

• the ID token (102) with a first communications interface (122), a first processor (116), and a first memory (104), wherein the first memory (104) contains computer-readable first program instructions (120), wherein terminal certificate information items (165) relating to a terminal certificate (162) associated with the terminal (152) is stored in one or more entries of a first blockchain (114), wherein the first blockchain (114) is stored in the first memory (104),
• the terminal (152) with a second communications interface (172), a second processor (166), and a second memory (154), wherein the second memory (154) contains computer-readable second program instructions (170), wherein ID token certificate information items (115) relating to an ID token certificate (112) associated with the ID token (102) is stored in one or more entries of a second blockchain (164), wherein the second blockchain (164) is stored in the second memory (154),

wherein the first and second communications interface (122, 172) are configured to communicate with one another, and wherein the first processor (116), when the first program instructions (120) are executed, controls the ID token (102) such that the ID token (102), jointly with the terminal (152), carries out a method according to any one of the preceding claims, and wherein the second processor (166), when the second program instructions (170) are executed, controls the terminal (152) such that the terminal (152), jointly with the ID token (102) carries out a method according to any one of the preceding claims.

14. A method for granting access to a security device (220) which controls access to limited resources, by means of an ID token (102) and a terminal (152), wherein the method comprises:

   • carrying out, by the ID token (102) and the terminal (152), the method according to any one of the preceding claims 1 to 12,
   • upon the granting of access for the terminal (152) to the attribute (109) stored in the ID token (102), reading of the attribute (109) by the terminal (152),
   • verifying of the read attribute (109) by the terminal (152), wherein the terminal (152), in the event of successful verification of the attribute (109), grants access to the security device (220).

15. A security system (182) which comprises a system (180) according to claim 13 and a security device (220) which controls access to restricted resources, wherein the execution of the second program instructions (170) by the second processor (166) further prompts the terminal (152), upon the granting of access for the terminal (152) to the attribute (109) stored in the ID token (102), to read the attribute (109), to verify the read attribute (109), and, in the event of a successful verification of the attribute (109), to grant the access to the security device (220).

**Revendications**

1. Procédé de contrôle d'un accès d'un terminal (152) à un attribut (109) stocké dans un jeton d'ID (102), où des informations de certificat de terminal (165) concernant un certificat de terminal (162) associé au terminal (152) sont stockées dans une ou plusieurs entrées d'une première chaîne de blocs (114), où la première chaîne de blocs (114) est stockée dans une première mémoire (104) du jeton d'ID (102), où des informations de certificat de jeton d'ID (115) concernant un certificat de jeton d'ID (112) associé au jeton d'ID (102) sont stockées dans une ou plusieurs entrées d'une deuxième chaîne de blocs (164), où la deuxième chaîne de blocs (164) est stockée dans une deuxième mémoire (154) du terminal (154), où le procédé comprend :

   • l'exécution d'une authentification de terminal, où le terminal (152) est authentifié par le jeton d'ID (102) moyennant l'emploi du certificat de terminal (162) et des informations de certificat de terminal (165) de la deuxième chaîne de blocs (164),
   • l'exécution d'une authentification de jeton d'ID, où le jeton d'ID (102) est authentifié par le terminal (152) moyennant l'emploi du certificat de jeton d'ID (112) et des informations de certificat de jeton d'ID (115) de la première chaîne de blocs (114),
   • suite à une authentification de terminal réussie et une authentification de jeton d'ID réussie, la libération de l'accès du terminal (152) à l'attribut (109) stocké dans le jeton d'ID (102).

2. Procédé selon la revendication 1, dans lequel l'authentification de terminal comprend en outre :

   • la vérification de l'authenticité du certificat de terminal (162) moyennant l'emploi des informations de certificat de terminal (115) mises à disposition par la première chaîne de blocs (114), où une authentification de terminal réussie est conditionnée à une vérification réussie de l'authenticité du certificat de terminal (162), et/ou

   où l'authentification de terminal comprend en outre :

   • la vérification du statut du certificat de terminal (162) moyennant l'emploi des informations de certificat de terminal (115) mises à disposition par la première chaîne de blocs (114), et/ou

où l'authentification de jeton d'ID comprend en outre :

• la vérification de l'authenticité du certificat de jeton d'ID (112) moyennant l'emploi des informations de certificat de jeton d'ID (115) mises à disposition par la deuxième chaîne de blocs (164), où une authentification de jeton d'ID réussie est conditionnée à une vérification réussie de l'authenticité du certificat de jeton d'ID (112), et/ou

où l'authentification de jeton d'ID comprend en outre :

• la vérification du statut du certificat de jeton d'ID (112) moyennant l'emploi des informations de certificat de jeton d'ID (115) mises à disposition par la deuxième chaîne de blocs (164) .

3. Procédé selon l'une des revendications précédentes, dans lequel le certificat de terminal (162) comprend une clé de terminal statique publique (160) associée au terminal (152), où une clé de terminal statique privée (158), laquelle forme ensemble avec la clé de terminal statique publique (160) une paire de clés de terminal asymétrique statique, est stockée dans une zone de mémoire sécurisée (156) de la deuxième mémoire (154) du terminal (152), et où l'authentification de terminal, pour la fourniture du certificat de terminal (162), comprend en outre :

• la réception du certificat de terminal (162) avec la clé de terminal statique publique (160) par le jeton d'ID (102) à partir du terminal (152),

où le certificat de jeton d'ID (112) comprend une clé de jeton d'ID statique publique (110) associée au jeton d'ID (102), où une clé de jeton d'ID statique privée (108), laquelle forme ensemble avec la clé de jeton d'ID statique publique une paire de clés de jeton d'ID statique asymétrique, est stockée dans une zone de mémoire sécurisée (106) de la première mémoire (104) du jeton d'ID (102),où l'authentification du jeton d'ID, pour la fourniture du certificat de jeton d'ID (112), comprend en outre :

• la réception du certificat de jeton d'ID (112) avec la clé de jeton d'ID statique publique (110) par le terminal (152) à partir du jeton d'ID (102).

4. Procédé selon l'une des revendications 1 à 2, dans lequel le certificat de terminal (162) avec la clé de terminal statique publique (160) comprend des informations de certificat de terminal (165) et où la fourniture du certificat de terminal (162) comprend une réception d'un identificateur du certificat de terminal (162) à partir du terminal (152) par le jeton d'ID -102, à l'aide duquel les informations de certificat correspondantes peuvent être identifiées et lues dans la première chaîne de blocs (114), et/ou
dans lequel le certificat de jeton d'ID (112) avec la clé de jeton d'ID statique publique (110) est compris par les informations de certification de jeton d'ID (115) et où la fourniture du certificat de jeton d'ID (112) comprend une réception d'un identificateur du certificat de jeton d'ID (112) à partir du jeton d'ID (102) par le terminal (152), à l'aide duquel les informations de certificat de jeton d'ID (115) correspondantes peuvent être identifiées et lues dans la deuxième chaîne de blocs (164).

5. Procédé selon l'une des revendications précédentes, dans lequel le contrôle d'accès a lieu dans un mode hors ligne du jeton d'ID (102) et/ou du terminal (152), et/ou
dans lequel, dans le cas de la première et de la deuxième chaîne de blocs (114, 164), il s'agit d'une chaîne de blocs commune.

6. Procédé selon l'une des revendications précédentes, où le procédé comprend en outre : suite à la libération de l'accès à l'attribut (109) stocké, l'entrée dans la première chaîne de blocs (114) d'un compteur d'utilisations actualisé du certificat de terminal (162), où l'entrée comprenant le compteur d'utilisations actualisé comprend l'identificateur du certificat de terminal (162).

7. Procédé selon la revendication 6, dans lequel les informations de certificat de terminal (165) indiquent une valeur de départ du compteur d'utilisations et la valeur du compteur d'utilisations est décrémentée à chaque actualisation, où le certificat de terminal (162) perd sa validité dès que le compteur d'utilisations atteint sa valeur limite inférieure, ou où les informations de certificat de terminal (165) indiquent une valeur limite supérieure pour le compteur d'utilisations et la valeur du compteur d'utilisations est incrémentée à chaque actualisation, où le certificat de terminal (162) perd sa validité dès que le compteur d'utilisations atteint la valeur limite supérieure, et/ou
où la première chaîne de blocs (114) comprend un module de programme dans un bloc avec des instructions de programme (120), où, suite à la libération de l'accès à l'attribut (109) stocké, le module de programme est activé et les instructions de programme (120) sont exécutées, où, par l'exécution des instructions de programme (120), l'actualisation du compteur d'utilisations du certificat de terminal (162) est commandée moyennant l'emploi des informations de certificat de terminal (165).

8. Procédé selon l'une des revendications précédentes, dans lequel le jeton d'ID (102) synchronise la première chaîne de blocs (114) suite à la libération de l'accès à l'attribut (109) stocké par le biais du terminal (152) avec un réseau (190) relié au terminal (152), et/ou

où le terminal (152) synchronise la deuxième chaîne de blocs (164) par le biais du réseau (190), et/ou
où la première chaîne de blocs (114) comprend une multiplicité d'informations de certificat de terminal (165) ajoutée à une multiplicité de certificats de terminaux (162) d'une multiplicité de terminaux (152), et/ou
où la deuxième chaîne de blocs (164) comprend une multiplicité d'informations de certificat de jeton d'ID (115) ajoutée à une multiplicité de certificats de jetons d'ID (112) d'une multiplicité de jetons d'ID (102), et/ou
où les informations de certificat de terminal (165) comprennent un identificateur du certificat de terminal (162) et une valeur de vérification du certificat de terminal (162), et/ou
où les informations de certificat de jeton d'ID(115) comprennent un identificateur du certificat de jeton d'ID (112) et une valeur de vérification du certificat de jeton d'ID (112), et/ou
où, pour le blocage du certificat de terminal (162), une première entrée de blocage est entrée dans la première chaîne de blocs (114), où la première entrée de blocage comprend l'identificateur du certificat de terminal (162), et/ou
où, pour le blocage du jeton d'ID (162), une deuxième entrée de blocage est entrée dans la deuxième chaîne de blocs (164), où la deuxième entrée de blocage comprend l'identificateur du certificat de jeton d'ID (112), et/ou
où les informations de certificat de terminal (165) définissent des autorisations du terminal (152) et une modification des autorisations du terminal (152) est ajoutée sous forme d'entrée à la première chaîne de blocs (114) où l'entrée correspondante comprend l'identificateur du certificat de terminal (162), et/ou
où les informations de certificat de jeton d'ID (115) définissent des autorisations du jeton d'ID (102) et une modification des autorisations du jeton d'ID (102) est ajoutée sous forme d'entrée à la deuxième chaîne de blocs (164), où l'entrée correspondante comprend l'identificateur du certificat de jeton d'ID (112).

9. Procédé selon l'une des revendications précédentes, dans lequel l'authentification de terminal comprend en outre :

• la réception d'un premier message du terminal (152) par le jeton d'ID (102), où le premier message présente une première signature générée moyennant l'emploi de la clé de terminal statique privée (158),
• la vérification de l'authenticité du premier message, où la vérification du premier message comprend une vérification de la première signature, moyennant l'emploi de la clé de terminal statique publique (160) comprise dans le certificat de terminal (162).

10. Procédé selon la revendication 9, dans lequel l'authentification de terminal comprend en outre :

• la création d'un premier secret aléatoire par le jeton d'ID (102),
• l'envoi du premier secret aléatoire au terminal (152) par le jeton d'ID (102),

où le premier message est reçu suite à l'envoi du premier secret aléatoire et comprend le premier secret aléatoire envoyé,
où la vérification de la première signature a lieu en outre moyennant l'emploi du premier secret aléatoire.

11. Procédé selon l'une des revendications 9 à 10, dans lequel l'authentification du jeton d'ID comprend une création d'un secret commun partagé du jeton d'ID (102) et du terminal (152), où la création du secret commun partagé comprend :

• la création d'une paire de clés de terminal asymétrique éphémère par le terminal (152), où la paire de clés de terminal asymétrique créée comprend une clé de terminal publique éphémère et une clé de terminal privée éphémère,
• la création du secret commun partagé par le terminal (152) moyennant l'emploi de la clé de terminal privée éphémère et de la clé de jeton d'ID publique statique (110),
• l'envoi de la clé de terminal publique éphémère par le terminal (152) au jeton d'ID (102),
• la création du secret commun partagé par le jeton d'ID (102), moyennant l'emploi de la clé de jeton d'ID statique privée (108) et de la clé de terminal publique éphémère reçue.

**12.** Procédé selon la revendication 11, dans lequel l'authentification de jeton d'ID comprend en outre :

• la réception d'un deuxième secret aléatoire à partir du jeton d'ID (102) par le terminal (152),
• la réception d'un deuxième message du jeton d'ID (102) par le terminal (152), où le deuxième message présente une deuxième signature créée moyennant l'emploi d'une clé de signature commune, où la clé de signature commune est créée moyennant l'emploi du secret commun partagé et du deuxième secret aléatoire,
• la création de la clé de signature commune par le terminal (152), moyennant l'emploi du secret commun partagé créé et du deuxième secret aléatoire reçu,
• la vérification de l'authenticité du deuxième message, où la vérification du deuxième message comprend une vérification de la deuxième signature moyennant l'emploi du deuxième secret aléatoire reçu et la clé de signature commune créée par le terminal (152), et/ou

où le terminal (152) exécute la création de la paire de clés de terminal asymétrique éphémère déjà au cours de l'authentification de terminal, où le terminal (152) envoie la clé de terminal publique éphémère au jeton d'ID (102), où, en complément, le premier message comprend la clé de terminal publique éphémère, où la vérification de la première signature a lieu en outre moyennant l'emploi de la clé de terminal publique éphémère, et où le jeton d'ID (102), pour la vérification de l'authenticité de la clé de terminal publique éphémère, compare la clé de terminal publique éphémère employée pour la vérification du premier message avec la clé de terminal publique éphémère reçue au cours de l'authentification d'ID afin de vérifier l'authenticité de la clé de terminal publique éphémère reçue.

**13.** Système (180) de contrôle d'un accès d'un terminal (152) à un attribut (109) stocké dans un jeton d'ID (102), lequel comprend :

• le jeton d'ID (102) avec une première interface de communication (122), un premier processeur (116) et une première mémoire (104), où la première mémoire (104) contient des premières instructions de programme (120) lisibles par ordinateur, où des informations de certificat de terminal (165) sont stockées avec un certificat de terminal (162) associé à un terminal (152) dans une ou plusieurs entrées d'une première chaîne de blocs (114), où la première chaîne de blocs (114) est stockée dans la première mémoire (104),
• le terminal (152) avec une deuxième interface de communication (172), un deuxième processeur (166) et une deuxième mémoire (154), où la deuxième mémoire (154) contient des deuxièmes instructions de programme (170) lisibles par ordinateur, où des informations de certificat de jeton d'ID (115) sont stockées avec un certificat de jeton d'ID (161) associé au jeton d'ID (102) dans une ou plusieurs entrées d'une deuxième chaîne de blocs (164), où la deuxième chaîne de blocs (164) est stockée dans la deuxième mémoire (154),

où les première et deuxième interfaces de communication (122, 172) sont conçues pour communiquer ensemble , et où le premier processeur (116), lors d'une exécution des premières instructions de programme (120), commande le jeton d'ID (102) de manière à ce que le jeton d'ID (102) exécute conjointement avec le terminal (152) un procédé selon l'une des revendications précédentes, et où le deuxième processeur (166), lors d'une exécution des deuxièmes instructions de programme (170), commande le terminal (152) de manière à ce que le terminal (152) exécute conjointement avec le jeton d'ID (102) un procédé selon l'une des revendications précédentes.

**14.** Procédé de libération d'un accès à un dispositif de sécurité (220), lequel régule l'accès à des ressources limitées au moyen d'un jeton d'ID (102) et d'un terminal (152), où le procédé comprend :

• l'exécution du procédé selon l'une des revendications précédentes 1 à 12 par le jeton d'ID (102) et le terminal (152),
• suite à la libération de l'accès du terminal (152) à l'attribut (109) stocké dans le jeton d'ID (102), la lecture de l'attribut (109) par le terminal (152),
• la vérification de l'attribut (109) lu par le terminal (152), où le terminal (152) libère l'accès au dispositif de sécurité (220) dans le cas d'une vérification réussie de l'attribut (109.

**15.** Système de sécurité (182), lequel comprend un système (180) selon la revendication 13 et un dispositif de sécurité (220), lequel régule l'accès à des ressources limitées, où l'exécution des deuxièmes instructions de programme (170) par le deuxième processeur (166) fait en outre que le terminal (152) lise l'attribut (109) suite à la libération de l'accès du terminal (152) à l'attribut (109) stocké dans le jeton d'ID (102),vérifie l'attribut (109) lu et dans le cas d'une vérification de l'attribut (109) réussie, libère l'accès vers le dispositif de sécurité (220).

Fig. 1

182

ID-Token — 102
— 104

Speicher — 106

Geschützter Bereich

Privater Schlüssel — 108

Attribut — 109

Öffentlicher Schlüssel — 110

ID-Token-Zertifikat — 112

1. Blockchain — 114

Kryp. Protokoll — 118

— 116

Prozessor

Instruktionen — 120

Schnittstelle — 122

Terminal — 152
— 154

Speicher — 156

Geschützter Bereich

Privater Schlüssel — 158

Öffentlicher Schlüssel — 160

Terminal-Zertifikat — 162

2. Blockchain — 164

Kryp. Protokoll — 168

— 166

Prozessor

Instruktionen — 170

Schnittstelle — 172

Blockchain-Server N — 202
— 204

Speicher

1. Blockchain — 114

2. Blockchain — 164

Kryp. Protokoll — 208

— 206

Prozessor

Instruktionen — 210

Schnittstelle — 212

190

Sicherungseinrichtung — 220

Verriegelungsvorrichtung — 222

Schnittstelle — 224

Fig. 2

**Fig. 3**

Fig. 4

| Bereitstellen eines Terminal-Zertifikats | 500 |
|---|---|

↓

| Verifizieren der Authentizität des Terminal-Zertifikats | 502 |
|---|---|

↓

| Prüfen des Status des Terminal-Zertifikats | 504 |
|---|---|

↓

| Aktualisieren des Nutzungszählers | 506 |
|---|---|

↓

| Synchronisieren der ersten Blockchain | 508 |
|---|---|

Fig. 5

| Bereitstellen eines ID-Token-Zertifikats | 600 |

| Verifizieren der Authentizität des ID-Token-Zertifikats | 602 |

| Prüfen des Status des ID-Token-Zertifikats | 604 |

| Aktualisieren des Nutzungszählers | 606 |

| Synchronisieren der zweiten Blockchain | 608 |

Fig. 6

| Terminal-Authentifizierung | 700 |

| ID-Token-Authentifizierung | 702 |

| Freigabe des Zugriffs auf das Attribut | 704 |

| Auswerten des Attributs | 706 |

| Freigabe des Zugangs zu der Sicherungseinrichtung | 708 |

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016200003 A1

**In der Beschreibung aufgeführte Nicht-Patentliteratur**

- Mastering Bitcoin. The Blockchain. 161 ff
- *Bitcoin: Peer-to-Peer Electronic Cash System, https://bitcoin.org/bitcoin.pdf*
- **DAVID SCHWARTZ et al.** The Ripple Protocol Consensus Algorithm. Ripple Labs Inc, 2014